# EUROPEAN PATENT APPLICATION

(11) **EP 3 813 430 A1**
(43) Date of publication of application: **28.04.2021**
(21) Application number: 19841239.7
(22) Date of filing: 25.06.2019
(51) Int. Cl.: H04W 36/00, H04W 36/08

(54) **SWITCHING METHOD AND APPARATUS, AND COMMUNICATIONS SYSTEM**

(30) Priority: 26.07.2018 CN 201810836065
(71) Applicant: HUAWEI TECHNOLOGIES CO., LTD., Shenzhen, Guangdong 518129 (CN)
(72) Inventor: JIN, Weisheng, Shenzhen, Guangdong 518129 (CN); LI, Huan, Shenzhen, Guangdong 518129 (CN)
(74) Representative: Epping - Hermann - Fischer
(86) International application number: PCT/CN2019/092823
(87) International publication number: WO 2020/019925

(57) **Abstract**

A handover method, an apparatus, and a communications system are provided, to resolve a prior-art problem that a delay is relatively large when a terminal device is handed over from a source access point device to a target access point device. The method includes: sending, by the source access point device, a first message to the target access point device through an access control device, and sending a second message to the terminal device, where the first message is used to notify the target access point device that the terminal device is prepared to be handed over to the target access point device, and the second message is used to indicate the terminal device to be handed over to the target access point device.

## Description

This application claims priority to Chinese Patent Application No. 201810836065.8, filed with the Chinese Patent Office on July 26, 2018 and entitled "HANDOVER METHOD, APPARATUS, AND COMMUNICATIONS SYSTEM", which is incorporated herein by reference in its entirety.

### TECHNICAL FIELD

This application relates to the field of communications technologies, and in particular, to a handover method, an apparatus, and a communications system.

### BACKGROUND

In an existing 4G system, when a terminal device is handed over from a source eNodeB (eNodeB) to a target eNodeB, a source mobility management entity (mobility management entity, MME) needs to send connection context information of the terminal device to a target MME, where the connection context information of the terminal device includes an MME context, a PDN connection context, and the like, so that the target MME prepares a connection resource required by the terminal device. If another service gateway (service gateway, service GW) needs to be selected after the terminal device is handed over, the target MME further needs to forward the connection context information of the terminal device to a target service GW, so that the target service GW allocates a tunnel resource to a session connection of the terminal device. In addition, the target MME further needs to forward the connection context information of the terminal device to the target eNodeB, so that the target eNodeB prepares an air interface resource required by the terminal device. After the target service GW, the target MME, and the target eNodeB all complete preparation work, the target MME needs to notify the source MME that the terminal device can be handed over to the target eNodeB, and then the source MME notifies, through the source eNodeB, the terminal device to be handed over to the target eNodeB.

A process of an existing handover method is complex, time overheads are relatively high, and as a result, a delay is relatively large when the terminal device is handed over from the source eNodeB (eNodeB) to the target eNodeB.

### SUMMARY

This application provides a handover method, an apparatus, and a communications system, to resolve a prior-art problem that a delay is relatively large when a terminal device is handed over from a source eNodeB to a target eNodeB.

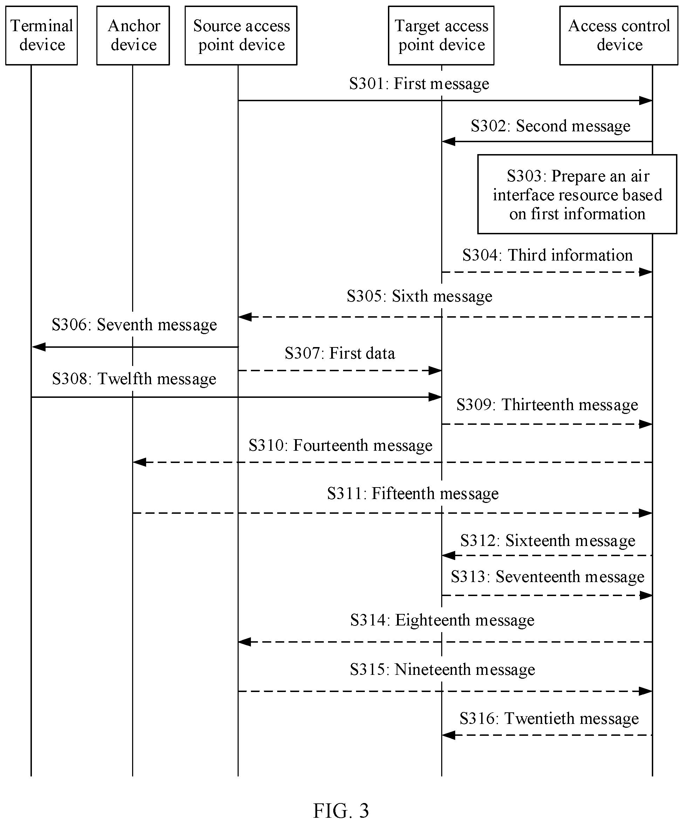

According to a first aspect, this application provides a handover method. The method includes: A source access point device sends a first message to a target access point device through an access control device, and sends a second message to the terminal device. The first message is used to notify the target access point device that the terminal device is prepared to be handed over to the target access point device, and the first message herein corresponds to a first message shown in FIG. 3 in a specific embodiment. The second message is used to indicate the terminal device to be handed over to the target access point device, and the second message herein corresponds to a seventh message shown in FIG. 3 in the specific embodiment. In this embodiment of this application, the source access point device notifies, through the access control device, the target access point device that the terminal device is prepared to be handed over to the target access point device, so that the target access point device prepares an air interface resource for the terminal device, and the terminal device can be handed over to the target access point device. In the prior art, a source eNodeB first notifies, through a source MME, a target MME that the terminal device is prepared to be handed over to the target access point device, and then the target MME notifies a target service GW and a target eNodeB that the terminal device is prepared to be handed over to the target access point device, so that the target MME, the target service GW, and the target eNodeB prepare access resources for the target eNodeB respectively, and the terminal device can be handed over to the target access point device. Compared with the prior art, this embodiment of this application can simplify a network procedure and further improve a handover speed.

In a possible design, the first message may carry first information, and the first information includes one or more of the following information: connection context information of a connection established by the terminal device on the source access point device, a mobility management context of the terminal device, and a Source access point device to Target access point device container. In the foregoing design, information such as the connection context information of the connection established by the terminal device on the source access point device is carried in the first message, so that the target access point device can prepare the air interface resource based on the information such as the connection context information of the connection established on the source access point device.

In a possible design, the connection context information may include one or more of the following information: public data network (public data network, PDN) context information, protocol data unit (protocol data unit, PDU) context information, and bearer context information.

In a possible design, the source access point device may further receive second information that is sent by the target access point device through the access control device. The second information includes one or more of the following information: connection context information of a connection established by the target access point device based on the first information, and a Target access point device to Source access point device container. The second information herein corresponds to third information in the specific embodiment. In the foregoing design, the source access point device may receive information such as the connection context information sent by the target access point device, so that the source access point device can indicate, based on the received information such as the connection context information, the terminal device to be handed over to the target access point device.

In a possible design, the source access point device may determine the target access point device based on third information. The third information may include one or more of the following information: a measurement report sent by the terminal device to the source access point device, load information of a plurality of access point devices, and the mobility management context of the terminal device. The third information herein corresponds to second information in the specific embodiment. In the foregoing design, a 3GPP binding message that is based on the control and provisioning of wireless access points (control and provisioning of wireless access points, CAPWAP) protocol specification and that is between the access point device and the access control device is defined, so that the source access point device may determine, based on information such as the load information of the plurality of access point devices, the target access point device to which the terminal device is handed over, to simplify the handover procedure and further improve the handover speed.

In a possible design, the plurality of access point devices may be any plurality of access point devices in a communications system, or may be a plurality of neighboring access point devices of the source access point device. In a possible design, the mobility management context may include one or more of the following information: a temporary identifier of the terminal device, a moving track of the terminal device, a moving range of the terminal device, and a tracking area list of the terminal device; and the tracking area list includes at least one tracking area.

In a possible design, the source access point device may further receive a mobility management policy that is of the terminal device and that is sent by the access control device, and allocate the tracking area list to the terminal device according to the mobility management policy. The mobility management policy includes at least one of the following information: the temporary identifier of the terminal device, the moving track of the terminal device, the moving range of the terminal device, and the like; and the tracking area list includes the at least one tracking area. In the foregoing design, the source access point device may allocate a tracking area list with a relatively small range to a terminal device with a small moving range, so that the source access point device can page the terminal device in the tracking area list with the relatively small range, and paging signaling can be further reduced. The source access point device may allocate a tracking area list with a relatively large range to a terminal device with a large moving range. When the terminal device moves in a tracking area included in the tracking area list, a tracking area update process does not need to be executed. Therefore, the source access point device pages the terminal device in the tracking area list with the relatively large range, and this can reduce the tracking area update process of the terminal device.

In a possible design, the source access point device may obtain the load information of the plurality of access point devices from the access control device.

In a possible design, the source access point device may periodically query the load information of the plurality of access point devices from the access control device, or the access control device may periodically push the load information of the plurality of access point devices to the source access point device.

In a possible design, before the source access point device sends the second message to the terminal device, the source access point device may determine a tunnel endpoint identifier of the target access point device, and send data to a tunnel corresponding to the tunnel endpoint identifier of the target access point device. The data is of the terminal device and is received by the source access point device from an anchor device. In the foregoing design, before the terminal device is handed over to the target access point device, the source access point device may send, through the tunnel corresponding to the tunnel endpoint identifier of the target access point device, the data that is of the terminal device and that is received from the anchor device, so as to better ensure performance of a network in a handover process of the terminal device.

In a possible design, that the source access point device determines a tunnel endpoint identifier of the target access point device may include: if the source access point device determines that the target access point device can allocate the tunnel endpoint identifier according to a preset rule, the source access point device determines the tunnel endpoint identifier according to the preset rule. Alternatively, the source access point device receives the tunnel endpoint identifier that is sent by the target access point device through the access control device. In the foregoing design, when the target access point device supports allocating the tunnel endpoint identifier according to the preset rule, the source access point device may determine the tunnel endpoint identifier according to the preset rule, so as to reduce a delay in the handover process and further improve the handover speed. When the target access point device does not support allocating the tunnel endpoint identifier according to the preset rule, the source access point device may further receive the tunnel endpoint identifier sent by the target access point device, so that the source access point device can prepare to obtain the tunnel endpoint identifier of the target access point device, and handover readiness can be further improved.

In a possible design, the anchor device may be configured to receive the data of the terminal device from a data network, and the anchor device may be the access control device, or the anchor device may be the source access point device, or the anchor device is another access point device.

In a possible design, that the source access point device determines the tunnel endpoint identifier according to the preset rule may include: The source access point device sends a data packet to the target access point device. A preset field in an encapsulation header of the data packet is the tunnel endpoint identifier, and the tunnel endpoint identifier includes one or more of the following information: an identifier of the terminal device and a connection identifier of the terminal device. In the foregoing design, a format of a pre-configured forwarding data channel endpoint identifier is defined by using a data-packet-based specific field, so as to reduce the delay in the handover process and further improve the handover speed.

In a possible design, the preset field in the encapsulation header of the data packet may be a Key field in an encapsulation header of a generic routing encapsulation (Generic Routing Encapsulation, GRE) data packet and a wireless specific information (wireless specific information) field in an encapsulation header of a CAPWAP data packet.

According to a second aspect, this application provides a handover method. The method includes: A target access point device receives a first message that is sent by a source access point device through the access control device, prepares an air interface resource for the terminal device based on first information, and receives a second message sent by the terminal device. The first message is used to notify the target access point device that the terminal device is prepared to be handed over to the target access point device, and the first message herein corresponds to a second message shown in FIG. 3 in a specific embodiment. The first information includes at least one of the following information: connection context information of a connection established by the terminal device on the source access point device, a mobility management context of the terminal device, and a Source access point device to Target access point device container. The first information herein corresponds to the first information in the specific embodiment. The second message is used to notify the target access point device that the terminal device is already handed over to the target access point device, and the second message herein corresponds to a twelfth message shown in FIG. 3 in the specific embodiment. In this embodiment of this application, the source access point device notifies, through the access control device, the target access point device that the terminal device is prepared to be handed over to the target access point device, so that the target access point device can prepare the air interface resource for the terminal device, to enable the terminal device to be handed over to the target access point device. In the prior art, a source eNodeB first notifies, through a source MME, a target MME that the terminal device is prepared to be handed over to the target access point device, and then the target MME notifies a target service GW and a target eNodeB that the terminal device is prepared to be handed over to the target access point device, so that the target MME, the target service GW, and the target eNodeB prepare access resources for the target eNodeB respectively, and the terminal device can be handed over to the target access point device. Compared with the prior art, this embodiment of this application can simplify a network procedure and further improve a handover speed.

In a possible design, the first information is sent by the source access point device to the target access point device by using the first message, or the first information is obtained by the target access point device in advance. In the foregoing design, the target access point device may prepare the air interface resource based on information obtained in advance, such as the connection context information of the connection established by the terminal device on the source access point device, so as to reduce a handover delay and further improve the handover speed. The target access point device may further prepare the air interface resource based on the information such as the connection context information that is of the connection established by the terminal device on the source access point device and that is sent by the source access point device, so as to improve handover accuracy.

In a possible design, if the first information is obtained by the target access point device in advance, the target access point device may receive the first information that is sent by the access control device in an attach process of the terminal device or after the terminal device establishes the connection. In the foregoing design, the access control device may synchronize the information such as the connection context information of the terminal device to the target access point device in advance. Compared with a case in which the information is forwarded by the source access point device to the target access point device in a handover process, the handover delay can be shortened, and the handover speed can be further improved.

In a possible design, the target access point device may further send second information to the source access point device through the access control device. The second information includes one or more of the following information: connection context information of a connection established by the target access point device based on the first information, and a Target access point device to Source access point device container. The second information herein corresponds to third information in the specific embodiment. In the foregoing design, the source access point device may receive information such as the connection context information sent by the target access point device, so that the source access point device can indicate, based on the received information such as the connection context information, the terminal device to be handed over to the target access point device.

In a possible design, the connection context information may include one or more of the following information: PDN context information, PDU context information, and bearer context information.

In a possible design, the target access point device may send a first tunnel endpoint identifier to the source access point device through the access control device, and receive, through a first tunnel corresponding to the first tunnel endpoint identifier, a data packet sent by the source access point device. The data packet is data that is of the terminal device and that is received by the source access point device from an anchor device. Alternatively, the target access point device allocates a second tunnel endpoint identifier according to a preset rule, and receives through a second tunnel corresponding to the second tunnel endpoint identifier, the data packet sent by the source access point device. In the foregoing design, before the terminal device is handed over to the target access point device, the target access point device may receive, through the tunnel corresponding to the tunnel endpoint identifier of the target access point device, the data that is of the terminal device and that is received from the anchor device, so as to better ensure performance of a network in a handover process of the terminal device.

In a possible design, the anchor device may be configured to receive the data of the terminal device from a data network, and the anchor device may be the access control device, or the anchor device may be the source access point device, or the anchor device is another access point device.

In a possible design, that the target access point device allocates a second tunnel endpoint identifier according to a preset rule may include: The target access point device receives the data packet sent by the source access point device. A preset field in an encapsulation header of the data packet is the tunnel endpoint identifier, and the tunnel endpoint identifier includes at least one of the following information: an identifier of the terminal device and a connection identifier of the terminal device. In the foregoing design, a format of a pre-configured forwarding data channel endpoint identifier is defined by using a data-packet-based specific field, so as to reduce the delay in the handover process and further improve the handover speed.

In a possible design, the target access point device may send a third message to the access control device. The third message is used to request the access control device to establish a third tunnel between the target access point device and the anchor device, and the third tunnel is used to: after the terminal device is handed over to the target access point device, transmit the data of the terminal device between the target access point device and the anchor device. The third message herein corresponds to a thirteenth message shown in FIG. 3 in the specific embodiment. In the foregoing design, after the terminal device is handed over to the target access point device, the target access point device may receive the data of the terminal device through the tunnel between the target access point device and the anchor device, so as to implement data transmission between the terminal device and the data network after the terminal device is handed over.

In a possible design, the mobility management context may include at least one of the following information: a temporary identifier of the terminal device, a moving track of the terminal device, a moving range of the terminal device, and a tracking area list of the terminal device; and the tracking area list includes at least one tracking area. According to a third aspect, this application provides a handover method. The method includes: An access control device receives a first message sent by a source access point device, and sends a second message to the target access point device. The first message is used to notify the access control device that a terminal device is prepared to be handed over to the target access point device, and the first message herein corresponds to a first message shown in FIG. 3 in a specific embodiment. The second message is used to notify the target access point device that the terminal device is prepared to be handed over to the target access point device, and the second message herein corresponds to a second message shown in FIG. 3 in the specific embodiment. In this embodiment of this application, the source access point device notifies, through the access control device, the target access point device that the terminal device is prepared to be handed over to the target access point device, so that the target access point device prepares an air interface resource for the terminal device, and the terminal device can be handed over to the target access point device. In the prior art, a source eNodeB first notifies, through a source MME, a target MME that the terminal device is prepared to be handed over to the target access point device, and then the target MME notifies a target service GW and a target eNodeB that the terminal device is prepared to be handed over to the target access point device, so that the target MME, the target service GW, and the target eNodeB prepare access resources for the target eNodeB respectively, and the terminal device can be handed over to the target access point device. Compared with the prior art, this embodiment of this application can simplify a network procedure and further improve a handover speed.

In a possible design, the first message may carry first information, and the first information includes at least one of the following information: connection context information of a connection established by the terminal device on the source access point device, a mobility management context of the terminal device, and a Source access point device to Target access point device container. The first information herein corresponds to the first information in the specific embodiment. In the foregoing design, information such as the connection context information of the connection established by the terminal device on the source access point device is carried in the first message, so that the target access point device can prepare the air interface resource based on the information such as the connection context information of the connection established on the source access point device.

In a possible design, the mobility management context may include at least one of the following information: a temporary identifier of the terminal device, a moving track of the terminal device, a moving range of the terminal device, and a tracking area list of the terminal device; and the tracking area list includes at least one tracking area.

In a possible design, the access control device may receive second information sent by the target access point device, and send the second information to the source access point device. The second information includes at least one of the following information: connection context information of a connection established by the target access point device based on the first information, and a Target access point device to Source access point device container. The second information herein corresponds to the third information in the specific embodiment. In the foregoing design, the source access point device may receive information such as the connection context information sent by the target access point device, so that the source access point device can indicate, based on the received information such as the connection context information, the terminal device to be handed over to the target access point device.

In a possible design, the access control device may receive a third message sent by the target access point device, and establish the tunnel between the target access point device and the anchor device. The third message is used to request the access control device to establish the tunnel between the target access point device and the anchor device, and the tunnel is used to: after the terminal device is handed over to the target access point device, transmit data of the terminal device between the target access point device and the anchor device. The third message herein corresponds to a thirteenth message shown in FIG. 3 in the specific embodiment. In the foregoing design, after the terminal device is handed over to the target access point device, the target access point device may receive the data of the terminal device through the tunnel between the target access point device and the anchor device, so as to implement data transmission between the terminal device and the data network after the terminal device is handed over.

In a possible design, the access control device may send a mobility management policy of the terminal device to the source access point device. The mobility management policy includes at least one of the following information: a temporary identifier of the terminal device, a moving track of the terminal device, a moving range of the terminal device, and the like. In the foregoing design, the access control device may send the mobility management policy of the terminal device to the source access point device, so that the source access point device can allocate a tracking area list to the terminal device according to the mobility management policy.

According to a fourth aspect, this application provides an apparatus. The apparatus may be an access point device, an access control device, or a chip. The apparatus has a function of implementing any one of the embodiments in the first aspect, the second aspect, or the third aspect. The function may be implemented by hardware, or may be implemented by hardware by executing corresponding software. The hardware or the software includes one or more modules corresponding to the foregoing function.

According to a fifth aspect, an apparatus is provided, including a processor, a communications interface, and a memory. The communications interface is configured to transmit a message and/or data between the apparatus and another apparatus. The memory is configured to store a computer executable instruction; and when the apparatus runs, the processor executes the computer executable instruction stored in the memory, so that the apparatus performs the handover method according to any one of the first aspect or the embodiments of the first aspect, the handover method according to any one of the second aspect or the embodiments of the second aspect, or the handover method according to any one of the third aspect or the embodiments of the third aspect.

According to a seventh aspect, this application further provides a system. The system includes the source access point device in any one of the embodiments of the first aspect, the target access point device in any one of the embodiments of the second aspect, and the access control device in any one of the embodiments of the third aspect.

According to an eighth aspect, this application further provides a computer-readable storage medium. The computer-readable storage medium stores an instruction; and when the instruction is run on a computer, the computer is enabled to perform the method according to the foregoing aspects.

According to a ninth aspect, this application further provides a computer program product including an instruction. When the computer program product runs on a computer, the computer is enabled to perform the method according to the foregoing aspects.

### BRIEF DESCRIPTION OF DRAWINGS

FIG. 1 is a flowchart of a method for handing over a terminal device to a base station according to this application;
FIG. 2 is a schematic architectural diagram of a communications system according to this application;
FIG. 3 is a schematic flowchart of a handover method according to this application;
FIG. 4 is a flowchart of a method for synchronizing first information according to this application;
FIG. 5 is a schematic diagram of a format of a GRE encapsulation header according to this application;
FIG. 6 is a schematic diagram of a format of a CAPWAP encapsulation header according to this application;
FIG. 7A is a schematic diagram of a method for determining a tunnel endpoint identifier pre-allocation capability according to this application;
FIG. 7B is a schematic diagram of another method for determining a tunnel endpoint identifier pre-allocation capability according to this application;
FIG. 8 is a schematic flowchart of an attach method of a terminal device according to this application;
FIG. 9 is a schematic structural diagram of a communications apparatus according to this application;
FIG. 10 is a schematic structural diagram of another communications apparatus according to this application;
FIG. 11 is a schematic structural diagram of another communications apparatus according to this application; and
FIG. 12 is a schematic structural diagram of a communications apparatus according to this application.

### DESCRIPTION OF EMBODIMENTS

To make the objectives, technical solutions, and advantages of this application clearer, the following further describes this application in detail with reference to the accompanying drawings.

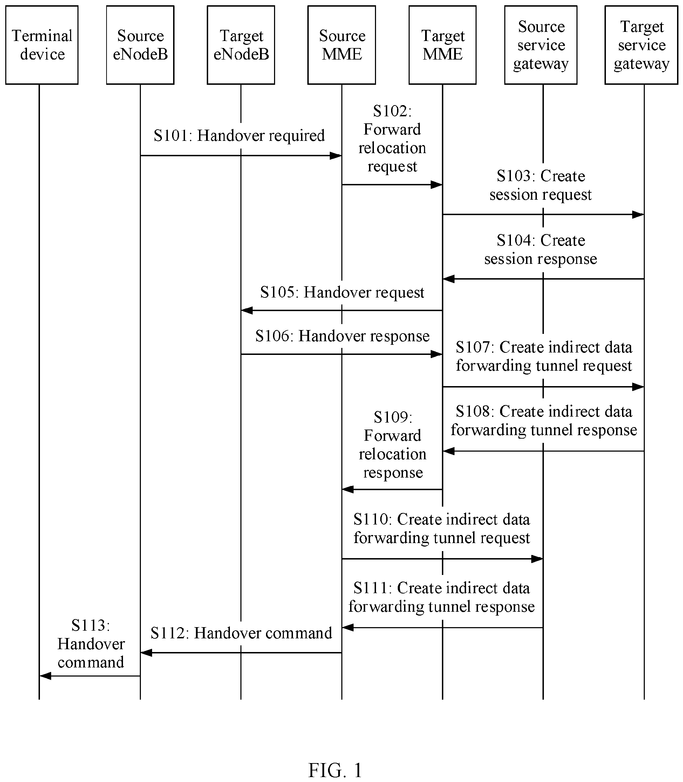

In an existing 4G system, when a terminal device is handed over from a source eNodeB (eNodeB) to a target eNodeB, the handover may be specifically implemented by using the following process, as shown in FIG. 1:
S101: The source eNodeB (eNodeB) sends handover required (Handover Required) to a source mobility management entity (mobility management entity, MME) to which the terminal device is attached, where the Handover Required is used to notify the source MME that the terminal device is prepared to be handed over to the target eNodeB, and the Handover Required carries connection context information of the terminal device and the like.

S102: The source MME sends a forward relocation request (Forward Relocation Request) to a target MME in which the target eNodeB is located, where the forward relocation request is used to notify the target MME that the terminal device is prepared to be handed over to the target eNodeB, and the forward relocation request carries the connection context information of the terminal device and the like.

If the target MME determines that another service gateway (service gateway, service GW) needs to be selected after the terminal is handed over, steps S103 and S104 may be performed after S102 is performed.

S103: The target MME sends a create session request (Create Session Request) to a target service GW, where the Create Session Request is used to request the target service GW to establish a session with the target MME, and the Create Session Request carries the connection context information of the terminal device and the like.

S104: The target service GW sends a create session response (Create Session Response) to the target MME

S105: The target MME sends a handover request (Handover Request) to the target eNodeB, where the second handover request is used to notify the target eNodeB that the terminal device is prepared to be handed over to the target eNodeB, and the second handover request carries the connection context information of the terminal device and the like.

S106: After preparing an air interface resource for the terminal device, the target eNodeB sends a handover request acknowledge (Handover Request Acknowledge) to the target MME

S107: The target MME sends a create indirect data forwarding tunnel request (Create Indirect Data Forwarding Tunnel Request) to the target service GW, where the Create Indirect Data Forwarding Tunnel Request is used to request the target service GW to establish a data forwarding tunnel between the target service GW and the target MME

S108: The target service GW sends a create indirect data forwarding tunnel response (Create Indirect Data Forwarding Tunnel Response) to the target MME.

S109: The target MME sends a forward relocation response (Forward Relocation Response) to the source MME S110: The source MME sends a create indirect data forwarding tunnel request (Create Indirect Data Forwarding Tunnel Request) to a source service GW, where the Create Indirect Data Forwarding Tunnel Request is used to request the source service GW to create a data forwarding tunnel between the source service GW and the source MME Sill: The source service GW sends a create indirect data forwarding tunnel response (Create Indirect Data Forwarding Tunnel Response) to the source MME

S112: The source MME sends a handover command (Handover Command) to the source eNodeB, where the Handover Command is used to notify the terminal device to be handed over to the target eNodeB.

S113: The source eNodeB forwards the Handover Command to the terminal device.

It can be learned that a process of an existing handover method is complex, time overheads are relatively high, and as a result, a delay is relatively large when the terminal device is handed over from the source eNodeB to the target eNodeB.

To resolve this problem, this application provides a handover method, an apparatus, and a communications system. The method and the apparatus are conceived based on a same invention concept. The method and the apparatus have similar principles for resolving problems. Therefore, for implementation of the apparatus and the method, refer to each other, and details of repeated parts are not described.

"A plurality of' in this application means two or more.

In addition, it should be understood that in descriptions of this application, terms such as "first" and "second" are merely intended for purposes of description, and should not be understood as an indication or implication of relative importance, and cannot be understood as an indication or implication of a sequence.

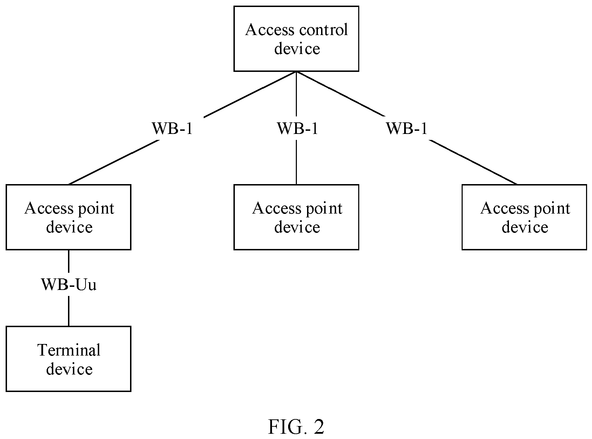

Referring to FIG. 2, an embodiment of this application provides a communications system. The communications system may include a terminal device, an access point device, and an access control device. In the communications system, an air interface technology between the terminal device and the access point device is not limited. For example, the air interface technology may be long term evolution (long term evolution, LTE), a fifth generation (5G) communications system, or a hybrid architecture of LTE and 5G; and may be a licensed-spectrum-based air interface technology, or may be an unlicensed-spectrum-based air interface technology.

The terminal device is also referred to as wireless broadband customer-premises equipment (wireless broadband customer-premises equipment, WBCPE) or user equipment (user equipment, UE), and is a device that provides voice and/or data connectivity for a user, for example, a handheld device or a vehicle-mounted device that has a wireless connection function. A common terminal includes, for example, a mobile phone, a tablet, a notebook computer, a palmtop computer, a mobile internet device (mobile internet device, MID), and a wearable device such as a smartwatch, a smart band, or a pedometer. Alternatively, the terminal device may be a terminal device in a vertical industry, for example, a self-driving car, a mechanical arm, or an electricity meter in a factory.

The access point device is also referred to as a wireless broadband access point (wireless broadband access point, WBAP). The access point device may terminate air interface signaling and a non-access stratum (non-access stratum, NAS) message that are sent by the terminal device, may further provide an access management function, an authentication function, a mobility management function, a session management function, and the like of the terminal device, and may further serve as an egress gateway of data connection for local forwarding to communicate with an external data network. To be specific, when the local forwarding is performed, the access point device may serve as an anchor device for data connection when the terminal device moves. Functions such as terminating the non-access stratum (non-access stratum, NAS) message sent by the terminal device, the authentication function, the mobility management function, and the session management function may also be implemented by the access control device. The access control device is also referred to as a wireless broadband access controller (wireless broadband access controller, WBAC), may be configured to provide a user subscription storage and management function, the mobility management function, a policy control function, and an access point device configuration management function for the terminal device, and may further serve as an egress gateway of a data connection for centralized forwarding to communicate with an external data network. To be specific, when the centralized forwarding is performed, the access control device serves as an anchor device for data connection when the terminal device moves. The external data network may be a public data network or a packet data network (public data network, or packet data network, PDN), a data network (data network, DN), a service network (such as an IP multimedia subsystem (IP multimedia subsystem, IMS) system) provided by an operator, or a service network provided by an enterprise or a service provider.

The terminal device may be connected to the access point device through a control plane WB-Uu interface, and data may be transmitted between the terminal device and the access point device through the WB-Uu interface. The WB-Uu interface is similar to a 3GPP LTE-Uu air interface. The terminal device may support the NAS message defined in 3GPP, and the NAS message may be terminated at the access point device. The access point device may be connected to the WBAC through a control plane WB-1 interface, and data may be transmitted between the access point device and the WBAC through the WB-1 interface. Access point devices cannot be connected to each other through a control plane interface, and data can be forwarded between the access point devices in an IP routing manner.

Based on the architecture of the communications system provided in FIG. 2, an embodiment of this application provides a handover method. As shown in FIG. 3, the method may specifically include the following steps.

Before a terminal device is handed over to a target access point device, a source access point device may determine that the terminal device needs to be handed over to the target access point device. Specifically, the source access point device may determine, based on a measurement report reported by the terminal device, that the terminal device needs to be handed over to the target access point device.

S301: The source access point device sends a first message to an access control device, where the first message is used to notify the access control device that the terminal device is prepared to be handed over to the target access point device. The first message may carry first information, and the first information may include one or more of the following information: connection context information of a connection established by the terminal device on the source access point device, a mobility management context of the terminal device, and a Source access point device to Target access point device container (Source WBAP to Target WBAP container). The Source WBAP to Target WBAP container may include one or more first parameters, and the first parameter may be a parameter required when the terminal device is handed over. The first message may further carry an identifier of the target access point device. It is clear that the first message may also carry other information, and this is not listed one by one in this embodiment of this application. The connection context information in the embodiments of this application may include one or more of the following information: PDN context information, PDU context information, and bearer context information.

A specific protocol type of the message in the embodiments of this application may be control and provisioning of wireless access points (control and provisioning of wireless access points, CAPWAP), the simple network management protocol (simple network management protocol, SNMP), or another protocol. A protocol type of the message is not specifically limited in the embodiments of this application. For ease of description, the CAPWAP protocol is used as an example to describe the message in the embodiments of this application.

When the CAPWAP protocol is used as an example, the message in the embodiments of this application may have two formats. One format is a CAPWAP Message (Vendor Specific (List of 3GPP specific message container)), where the List of 3GPP specific message container may be a target node identifier (Target Node ID)+a message container (message container), and the Target Node ID represents a destination receive end of information in the message container. The Target Node ID may alternatively be an optional information element. For example, if the message does not include the Target Node ID, it indicates that a receive end of information carried in a corresponding message container is a preset target node, for example, a WBAC. The message container carries specific information.

The other format is a CAPWAP Message (Vendor Specific (Forward container, Direct container)), where the Forward container represents a message that can be directly forwarded by the access control device without parsing, and a format of the Forward container is the same as that of the List of 3GPP specific message container. The Direct container represents a message that needs to be parsed by the access control device, and a format of the Direct container may be the same as that of the List of 3GPP specific message container, or may be the same as that of the message container.

In an implementation, the first message may be a wireless termination points (wireless termination points, WTP) event request (Event Request) message in the CAPWAP protocol. A format of the first message may be a WTP Event Request (V[Target WBAP ID, Relocation Request]), the Target WBAP ID may be an identifier of the access control device, the Relocation Request is used to notify the receive end that the terminal device is prepared to be handed over to the target access point device, and the Relocation Request may carry the first information.

In another implementation, the first message may be a Relocation Request. Therefore, the source access point device may send the first message to the access control device by using a WTP Event Request (V[Target WBAP ID, Relocation Request]).

In a possible implementation, the source access point device may determine the target access point device based on second information. The second information may include one or more of the following information: the measurement report sent by the terminal device to the source access point device, load information of a plurality of access point devices, and a mobility management context of the terminal device. The source access point device may obtain the load information of the plurality of access point devices from the access control device. Specifically, the source access point device may periodically query the load information of the plurality of access point devices from the access control device, or the access control device may periodically push the load information of the plurality of access point devices to the source access point device. The plurality of access point devices may be any plurality of access point devices in the communications system, or a plurality of neighboring access point devices of the source access point device, or all access point devices in the communications system.

The mobility management context may include one or more of the following information: a temporary identifier of the terminal device, a moving track of the terminal device, a moving range of the terminal device, and a tracking area list of the terminal device. The tracking area list includes at least one tracking area, and a mobility management policy. It is clear that the source access point device may alternatively determine the target access point device based on other information. This is not specifically limited in this embodiment of this application.

S302: The access control device sends a second message to the target access point device, where the second message is used to notify the target access point device that the terminal device is prepared to be handed over to the target access point device. The second message may carry the first information. The access control device may send the first information to the target access point device by using the second message based on the identifier that is of the target access point device and that is carried in the first message. It is clear that the second message may also carry other information, and this is not listed one by one in this embodiment of this application.

In an implementation, the second message may be a station configuration request (Station Configuration Request) message in the CAPWAP protocol. A format of the second message may be a Station Configuration Request (V[Target WBAP ID, Relocation Request]), and the Target WBAP ID may be the identifier of the target access point device.

In another implementation, the second message may be a Relocation Request. Therefore, the access control device may send the second message to the target access point device by using a Station Configuration Request (V[Target WBAP ID, Relocation Request]).

S303: The target access device prepares an air interface resource for the terminal device based on the first information. The target access device may obtain the first information in either of the following two manners:
Manner 1: The first information may be sent by the source access point device to the target access point device by using the first message. In other words, the first message sent by the source access point device to the access control device in step S301 carries the first information, and the second message sent by the access control device to the target access point device in step S302 carries the first information, so that the target access point device can obtain the first information after receiving the second message.
Manner 2: The first information may be obtained by the target access point device in advance. For example, the target access point device may receive the first information that is sent by the access control device in an attach process of the terminal device or after the terminal device establishes the connection.

In the attach process of the terminal device or after the terminal device establishes the connection, the access control device selects some access point devices to synchronize the first information of the terminal device. The access control device may select one or more neighboring access point devices of the source access point device to synchronize the first information of the terminal device. Alternatively, the access control device may select all access point devices in the communications system to synchronize the first information of the terminal device. Alternatively, the access control device may select one or more access point devices in the communications system according to a preset selection rule to synchronize the first information of the terminal device. Alternatively, the access control device may select one or more access point devices according to the mobility management policy of the terminal device to synchronize the first information of the terminal device. The mobility management policy includes one or more of the following information: the temporary identifier of the terminal device, the moving track of the terminal device, the moving range of the terminal device, and the like.

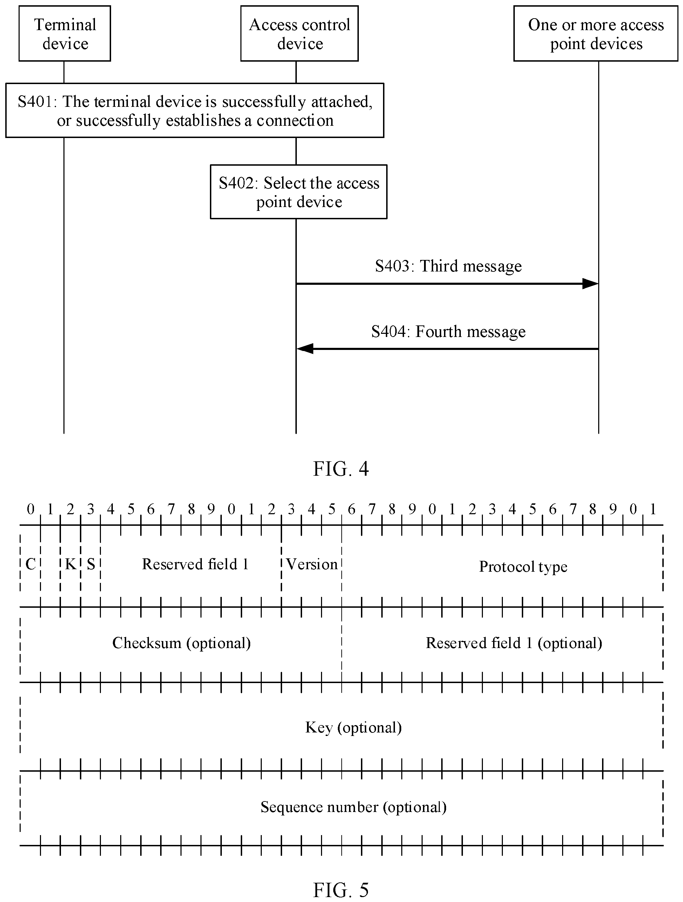

For a process in which the access control device synchronizes the first information of the terminal device to the access point device, refer to FIG. 4.

S401: The terminal device is successfully attached, or successfully establishes a connection.

S402: The access control device selects an access point device.

S403: The access control device sends a third message to the access point device, where the third message carries first information, and the third message is used to indicate the access point device to synchronize the first information of the terminal device.

In an implementation, the third message may be a Station Configuration Request message or a configuration update request (Configuration Update Request message) message in the CAPWAP protocol. The Station Configuration Request message is used as an example, and a format of the third message may be a Station Configuration Request (V[Target WBAP ID, context synchronization request (Context Synchronization Request)]). The Target WBAP ID may be an identifier of the access point device selected by the access control device, the Context Synchronization Request is used to indicate the access point device to synchronize the first information of the terminal device, and the Context Synchronization Request carries the first information.

In another implementation, the third message may be a Context Synchronization Request. Therefore, in step S403, the access control device may send the third message to the access point device by using a Station Configuration Request (V[Target WBAP ID, Context Synchronization Request]).

S404: The access point device sends a fourth message to the access control device, where the fourth message is used to notify the access control device that the access point device already synchronizes the first information of the terminal device.

In an implementation, the fourth message may be a station configuration response (Station Configuration Response) message or a configuration update response (Configuration Update Response) message in the CAPWAP protocol. The Station Configuration Response message is used as an example, and a format of the fourth message may be a Station Configuration Response (V[Target WBAP ID, context synchronization response (Context Synchronization Response)]). The Target WBAP ID may be the identifier of the access control device, and the Context Synchronization Response is used to notify the access control device that the access point device already synchronizes the first information of the terminal device.

In another implementation, the fourth message may be a Context Synchronization Response. Therefore, the Station Configuration Response message is used as an example, and the access point device may send the fourth message to the access control device by using a Station Configuration Response (V[Target WBAP ID, Context Synchronization Response]).

After step S303 is performed and before S306 is performed, steps S304 and S305 may be performed.

S304: The target access point device sends third information to the access control device, where the third information may include one or more of the following information: connection context information of a connection established by the target access point device based on the first information, and a Target access point device to Source access point device container (Target WBAP to Source WBAP Transparent Container). The Target WBAP to Source WBAP Transparent Container may include one or more second parameters, and the one or more second parameters may be determined by the target access point device based on one or more first parameters. The target access point device may send the third information to the access control device by using a fifth message, where the fifth message is used to notify the access control device that the target access point device already prepares the air interface resource. The fifth message may further carry a tunnel endpoint identifier of the target access point device, and the tunnel endpoint identifier is used by the source access point device to forward a data packet to the target access point device. The data packet is data that is of the terminal device and that is received by the source access point device from an anchor device. It is clear that the fifth message may also carry other information, and this is not listed one by one in this embodiment of this application.

In an implementation, the fifth message may be a Station Configuration Response message. A format of the fifth message may be a Station Configuration Response (V[Target WBAP ID, reconfiguration response (Relocation Response)]), the Target WBAP ID may be the identifier of the access control device, the Relocation Response is used to notify the receive end that the target access point device already prepares the air interface resource, and the Relocation Response message carries the third information.

In another implementation, the fifth message may be a Relocation Response. Therefore, the target access point device may send the fifth message to the access control device by using a Station Configuration Response (V[Target WBAP ID, Relocation Response]).

S305: The access control device sends a sixth message to the source access point device. The sixth message may carry the third information and/or the tunnel endpoint identifier of the target access point device.

In an implementation, the sixth message may be a WTP event response (Event Response) message in the CAPWAP protocol. A format of the sixth message may be a WTP Event Response (V[Target WBAP ID, Relocation Response]), and the Target WBAP ID may be an identifier of the source access point device.

In another implementation, the sixth message may be a Relocation Response. Therefore, the access control device may send the sixth message to the source access point device by using a WTP Event Response (V[Target WBAP ID, Relocation Response]).

S306: The source access point device sends a seventh message to the terminal device, where the seventh message is used to indicate the terminal device to be handed over to the target access point device. The seventh message may be a handover command (Handover Command) message in the CAPWAP protocol.

After step S306 is performed and before step S308 is performed, the source access point device may send, to the target access point device, the data packet that is of the terminal device and that is received from the anchor device. For details, refer to step S307. For example, when local forwarding is performed, the anchor device may be a source access point device, or may be any other access point device. When centralized forwarding is performed, the anchor device may be an access control device.

S307: The source access point device forwards the data packet to the target access point device based on the tunnel endpoint identifier of the target access point device. In this way, the target access point device may receive the data packet based on the tunnel endpoint identifier of the target access point device.

Step S307 may be implemented in either of the following two manners:
Manner 1: The source access point device may determine the tunnel endpoint identifier according to a preset rule, and forward the data packet to the target access point device based on the tunnel endpoint identifier. In this way, the target access point device may determine the tunnel endpoint identifier according to the preset rule, and receive the data packet based on the tunnel endpoint identifier. Specifically, the source access point device may send the data packet to the target access point device, where a preset field in an encapsulation header of the data packet is the tunnel endpoint identifier, and the tunnel endpoint identifier includes one or more of the following information: an identifier of the terminal device and a connection identifier of the terminal device. In this way, the target access point device receives the data packet, and obtains the tunnel endpoint identifier from the preset field in the encapsulation header of the data packet. The connection identifier includes one or more of the following identifiers: a PDN connection identifier, a PDU connection identifier, and a bearer identifier.

For example, the preset field in the encapsulation header of the data packet may be a Key field in an encapsulation header of a generic routing encapsulation (Generic Routing Encapsulation, GRE) data packet and a wireless specific information (wireless specific information) field in an encapsulation header of a CAPWAP data packet.

A format of the GRE encapsulation header may be shown in FIG. 5. The Key field, that is, a GRE Key, is a tunnel endpoint identifier, and the Key field may specifically include the identifier of the terminal device and/or the connection identifier of the terminal device. In this way, the target access point device and the access control device may determine, based on the Key field in the encapsulation header of the received data packet in the GRE format, a terminal device to which the data packet belongs and a connection identifier.

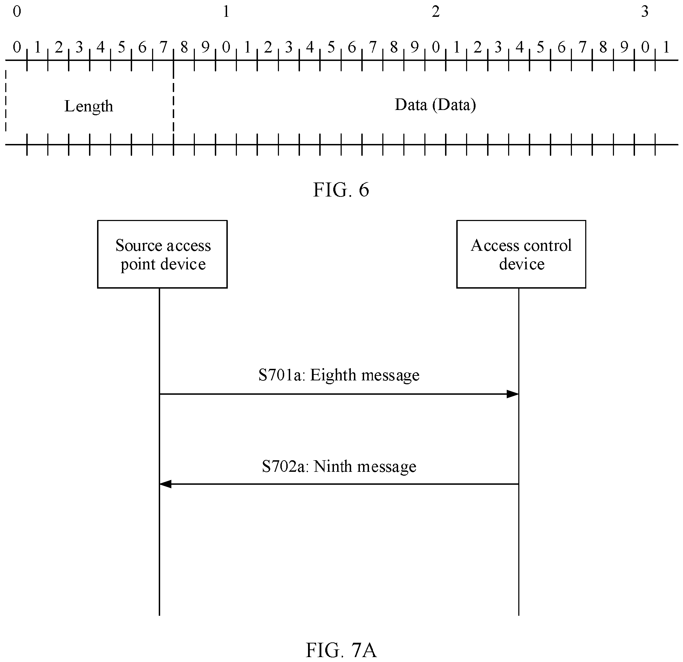

A format of the wireless specific information field in the CAPWAP may be shown in FIG. 6, and the wireless specific information field is used to describe information related to an access technology. A Data part may be defined freely, and a length is less than or equal to 255 bits. In this embodiment of this application, a definition of the Data part is extended, and the Data part is used to represent the tunnel endpoint identifier. Specifically, the Data part may include the identifier of the terminal device and/or the connection identifier of the terminal device. For example, the first 40 bits of the Data part represent the identifier of the terminal device, a 41^{st} bit to a 44^{th} bit represent a PDN connection identifier or a PDU connection identifier, and a 45^{th} bit to a 48^{th} bit represent a bearer identifier or a quality of service (quality of service, QoS) flow (flow) identifier. In this way, the target access point device and the access control device may determine, based on the Data part of the Wireless Specific Information field in the encapsulation header of the received data packet in the CAPWAP format, a terminal device to which the data packet belongs and a connection identifier.

Optionally, the source access point device may use Manner 1 when determining that the target access point device has a tunnel endpoint identifier pre-allocation capability, to be specific, when the target access point device can allocate the tunnel endpoint identifier according to the preset rule.

The source access point device may determine, in the following manner, that the target access point device has the tunnel endpoint identifier pre-allocation capability, as shown in FIG. 7A:
S701a: The source access point device sends an eighth message to the access control device, where the eighth message is used to query tunnel endpoint identifier pre-allocation capabilities of one or more access point devices from the access control device. The one or more access point devices may be any one or more access point devices in the communications system, or one or more neighboring access point devices of the source access point device, or all the access point devices in the communications system. The eighth message may carry identifiers of the one or more access point devices. The eighth message may be a configuration status request message in the CAPWAP protocol. The source access point device may query tunnel endpoint identifier pre-allocation capabilities of a plurality of access point devices from the access control device when the source access point device reports, to the access control device, a tunnel endpoint identifier pre-allocation capability of the source access point device.

S702a: The access control device sends a ninth message to the source access point device, where the ninth message carries information about the tunnel endpoint identifier pre-allocation capabilities of the one or more access point devices. The ninth message may be a configuration status response message in the CAPWAP protocol. The ninth message may further carry a message format supported by the one or more access point devices, to be specific, whether the GER format or the CAPWAP format is supported. In this way, the source access point device may forward a data packet to the target access point device based on a data format supported by the target access point device. For example, if the target access point device supports the GER format, the source access point device sends a data packet in the GER format to the target access point device.

Information about a tunnel endpoint identifier pre-allocation capability is used to indicate whether an access point device can determine a tunnel endpoint identifier according to the preset rule. A specific form of the information about the tunnel endpoint identifier pre-allocation capability is not limited, for example, may be represented by 1 and 0. That is, if the information about the tunnel endpoint identifier pre-allocation capability is 1, it indicates that the access point device can determine the tunnel endpoint identifier according to the preset rule. If the information about the tunnel endpoint identifier pre-allocation capability is 0, it indicates that the access point device cannot determine the tunnel endpoint identifier according to the preset rule. Alternatively, if the information about the tunnel endpoint identifier pre-allocation capability is 0, it indicates that the access point device can determine the tunnel endpoint identifier according to the preset rule. If the information about the tunnel endpoint identifier pre-allocation capability is 1, it indicates that the access point device cannot determine the tunnel endpoint identifier according to the preset rule. Alternatively, when the ninth message does not carry an identifier of an access point device, it may indicate that the access point device cannot determine a tunnel endpoint identifier according to the preset rule. Alternatively, when the ninth message does not carry an identifier of an access point device, it may indicate that the access point device can determine a tunnel endpoint identifier according to the preset rule.

In this way, the source access point device may locally store the information about the tunnel endpoint identifier pre-allocation capabilities of the one or more access point devices, and in a process in which the terminal device is handed over to the target access point device, determine, based on the locally stored information about the tunnel endpoint identifier pre-allocation capabilities of the plurality of access point devices, whether the target access point device supports the tunnel endpoint identifier pre-allocation capability.

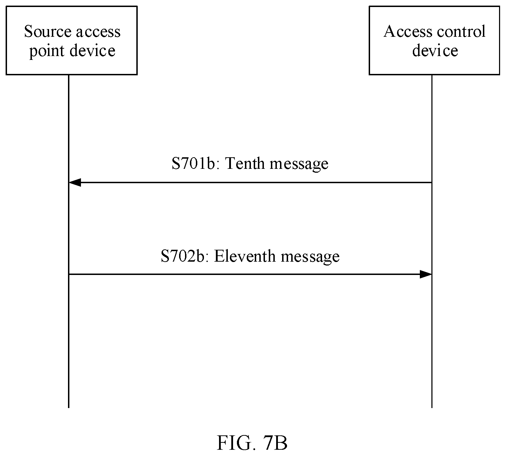

The source access point device may alternatively determine, in the following manner, that the target access point device has the tunnel endpoint identifier pre-allocation capability, as shown in FIG. 7B:
S701b: The access control device sends a tenth message to the source access point device, where the tenth message is used to indicate the source access point device to update stored information about tunnel endpoint identifier pre-allocation capabilities of a plurality of access point devices, and the tenth message may carry information about a tunnel endpoint identifier pre-allocation capability of an access point device whose tunnel endpoint identifier pre-allocation capability changes. The tenth message may be a configuration update request message in the CAPWAP protocol. The tenth message may further carry a message format supported by the plurality of access point devices, to be specific, whether the GER format or the CAPWAP format is supported. In this way, the source access point device may forward a data packet to the target access point device based on a data format supported by the target access point device. For example, if the target access point device supports the GER format, the source access point device sends a data packet in the GER format to the target access point device.

S702b: The source access point device sends an eleventh message to the access control device, where the eleventh message is used to notify the access control device that the source access point device already updates the stored information about the tunnel endpoint identifier pre-allocation capabilities of the plurality of access point devices. The eleventh message may be a configuration update response message in the CAPWAP protocol.

When the source access point device determines that the target access point device has the tunnel endpoint identifier pre-allocation capability, after S303 is performed, S304 and S305 may not be performed, and step S306 is directly performed.

Manner 2: The source access point device receives the tunnel endpoint identifier sent by the target access point device. The target access point device may send the tunnel endpoint identifier of the target access point device to the access control device by using the fifth message in step S304, and the access control device sends the tunnel endpoint identifier of the target access point device to the source access point device by using the sixth message in step S305. In this way, after receiving the sixth message sent by the access control device, the source access point device determines the tunnel endpoint identifier sent by the target access point device.

S308: The terminal device is handed over to the target access point device, and sends a twelfth message to the target access point device, where the twelfth message is used to notify the target access point device that the terminal device is already handed over to the target access point device. The twelfth message may be a handover confirm (Handover Confirm) message in the CAPWAP protocol.

After step S308 is performed, the target access point device may request the access control device to request to establish a data forwarding tunnel between the target access point device and the anchor device, so that after the terminal device is handed over to the target access point device, data of the terminal device is transmitted between the target access point device and the anchor device through the established data forwarding tunnel. For details, refer to step S309 to step S312.

S309: The target access point device sends a thirteenth message to the access control device, where the thirteenth message is used to request the access control device to establish a tunnel between the target access point device and the anchor device, and the tunnel is used to: after the terminal device is handed over to the target access point device, transmit the data of the terminal device between the target access point device and the anchor device.

The second message sent by the access control device to the access control device in step S302 may further carry an identifier of the anchor device, so that the target access point device can send the thirteenth message based on the identifier that is of the anchor device and that is carried in the second message.

In an implementation, the thirteenth message may be a WTP Event Request message. A format of the thirteenth message may be a WTP Event Request (V[Target WBAP ID, Modify Tunnel Request]), the Target WBAP ID may be the identifier of the access control device, and the Modify Tunnel Request is used to request the receive end to establish a tunnel between the target access point device and the anchor device. The Modify Tunnel Request may carry PDN connection context information and/or PDU connection context information, and may further carry an endpoint identifier allocated by the target access point device to each bearer of the terminal device, where the endpoint identifier corresponding to each bearer may be an internet protocol (Internet Protocol, IP) address+a GRE Key.

In another implementation, the thirteenth message may be a Modify Tunnel Request. Therefore, the target access point device may send the thirteenth message to the access control device by using a WTP Event Request (V[Target WBAP ID, Modify Tunnel Request]).

S310: The access control device sends a fourteenth message to the anchor device, where the fourteenth message is used to request the anchor device to establish a tunnel between the anchor device and the target access point device. In an implementation, the fourteenth message may be a Station Configuration Request message. A format of the fourteenth message may be a Station Configuration Request (V[Target WBAP ID, Modify Tunnel Request]), and the Target WBAP ID may be the identifier of the anchor device.

In another implementation, the fourteenth message may be a Modify Tunnel Request. Therefore, the target access point device may send the fourteenth message to the access control device by using a Station Configuration Request (V[Target WBAP ID, Modify Tunnel Request]).

S311: The anchor device switches an uplink channel and a downlink channel of the terminal device to the target access point device, and sends a fifteenth message to the access control device, where the fifteenth message is used to notify the access control device that the anchor device already switches the uplink channel and the downlink channel of the terminal device to the target access point device.

In an implementation, the fifteenth message may be a Station Configuration Response message. A format of the fifteenth message may be a Station Configuration Response (V[Target WBAP ID, Modify Tunnel Response]), the Target WBAP ID may be the identifier of the access control device, and the Modify Tunnel Response is used to notify the receive end that the anchor device already switches the uplink channel and the downlink channel of the terminal device to the target access point device.

In another implementation, the fifteenth message may be a Modify Tunnel Response. Therefore, the anchor device may send the fifteenth message to the access control device by using a Station Configuration Response (V[Target WBAP ID, Modify Tunnel Response]).

If the anchor device is the access control device, step S312 may be directly performed after step S309 is performed. If the anchor device is the source access point device or any other access point device, after step S309 is performed, step S310 and step S311 may be first performed, and then step S312 may be performed.

If the anchor device is the source access point device, S309 to S312 may not be performed, and the target access point device may use the tunnel endpoint identifier that is of the target access point device and that is obtained in step S307 as a connection downlink tunnel identifier of the terminal device, so that after the terminal device is handed over to the target access point device, the anchor device sends the data of the terminal device to the target access point device based on the tunnel endpoint identifier of the target access point device. A connection context included in first information includes a connection uplink tunnel identifier allocated by the source access point device to the terminal device, so that after the terminal device is handed over to the target access point device, the target access point device may send the data of the terminal device to the anchor device based on the connection uplink tunnel identifier included in the connection context. Alternatively, when determining that the anchor device has the tunnel endpoint identifier pre-allocation capability, the target access point device may determine an uplink tunnel identifier according to the preset rule, so that after the terminal device is handed over to the target access point device, the target access point device may send the data of the terminal device to the anchor device based on the determined uplink tunnel identifier. The target access point device may obtain the tunnel endpoint identifier pre-allocation capability of the anchor device from the access control device by using the method described in FIG. 7A or FIG. 7B, to obtain the uplink tunnel identifier according to the preset rule. For a process in which the target access point device obtains the uplink tunnel identifier according to the preset rule, refer to the process of determining the tunnel endpoint identifier according to the preset rule in step S307. Details are not described again in this embodiment of this application.

S312: The access control device sends a sixteenth message to the target access point device, where the sixteenth message is used to notify the target access point device that the anchor device already switches the uplink channel and the downlink channel of the terminal device to the target access point device. The sixteenth message may be a WTP Event Response message, and the WTP Event Response message may carry the Modify Tunnel Response message in the fifteenth message.

In an implementation, the sixteenth message may be a WTP Event Response message. A format of the sixteenth message may be a WTP Event Response (V[Target WBAP ID, Modify Tunnel Response]), the Target WBAP ID may be the identifier of the target access point device, and the Modify Tunnel Response is used to notify the target access point device that the anchor device already switches the uplink channel and the downlink channel of the terminal device to the target access point device.

In another implementation, the sixteenth message may be a Modify Tunnel Response. Therefore, the access control device may send the sixteenth message to the target access point device by using a WTP Event Response (V[Target WBAP ID, Modify Tunnel Response]).

After step S312 is performed, step S313 may be performed.

S313: The target access point device sends a seventeenth message to the access control device, where the seventeenth message is used to notify the access control device that the terminal device is already handed over to the target access point device.

In an implementation, the seventeenth message may be a WTP Event Request message. A format of the seventeenth message may be a WTP Event Request (V[Target WBAP ID, reconfiguration complete notification (Relocation Complete Notification)]), the Target WBAP ID may be the identifier of the access control device, and the Relocation Complete Notification is used to notify the access control device that the terminal device is already handed over to the target access point device.

In another implementation, the seventeenth message may be a Relocation Complete Notification. Therefore, the target access point device may send the seventeenth message to the access control device by using a WTP Event Request (V[Target WBAP ID, Relocation Complete Notification]).

After step S313 is performed, step S314 and step S315 may be performed.

S314: The access control device sends an eighteenth message to the source access point device, where the eighteenth message is used to notify the source access point device that the terminal device is already handed over to the target access point device. The eighteenth message may further include a cancel location request (Cancel Location Request). The Cancel Location Request is used to: notify the source access point device that the terminal device is already handed over to the target access point device, and indicate the source access point device to delete a context of the terminal device.

In an implementation, the eighteenth message may be a Station Configuration Request message. A format of the eighteenth message may be a Station Configuration Request (V[Target WBAP ID, Relocation Complete Notification and/or Cancel Location Request]), the Target WBAP ID may be the identifier of the source access point device, and the Relocation Complete Notification is used to notify the source access point device that the terminal device is already handed over to the target access point device.

In another implementation, the eighteenth message may be a Relocation Complete Notification. Therefore, the access control device may send the eighteenth message and/or the Cancel Location Request to the source access point device by using a Station Configuration Request (V[Target WBAP ID, Relocation Complete Notification and/or Cancel Location Request]).

S315: The source access point device sends a nineteenth message to the access control device, where the nineteenth message is used to notify the access control device that the source access point device already confirms that the terminal device is already handed over to the target access point device. When receiving the nineteenth message, the source access point device may start a counter, and when the counter times out, the source access point device deletes locally stored connection data of the terminal device. The connection data of the terminal device includes at least the first information and/or the data forwarding tunnel between the source access point device and the target access point device. When the anchor device is a source access point device, the source access point device and the target access point device may not delete the forwarding tunnel between the source access point device and the target access point device, and the forwarding tunnel is used as a connection downlink tunnel of the terminal device.

In an implementation, the nineteenth message may be a Station Configuration Response message. A format of the nineteenth message may be a Station Configuration Response (V[Target WBAP ID, Relocation Complete ACK]), the Target WBAP ID may be the identifier of the access control device, and the Relocation Complete ACK is used to notify the access control device that the source access point device already confirms that the terminal device is already handed over to the target access point device.

In another implementation, the nineteenth message may be a Relocation Complete Notification. Therefore, the source access point device may send the nineteenth message to the access control device by using a Station Configuration Response (V[Target WBAP ID, Relocation Complete ACK).

After step S315 is performed, step S316 may be performed.

S316: The access control device sends a twentieth message to the target access point device, where the twentieth message is used to notify the target access point device that the source access point device already confirms that the terminal device is already handed over to the target access point device.

In an implementation, the twentieth message may be a WTP Event Response message. A format of the twentieth message may be a WTP Event Response (V[Target WBAP ID, Relocation Complete ACK]), and the Target WBAP ID may be the identifier of the target access point device.

In another implementation, the twentieth message may be a Relocation Complete Notification. Therefore, the target access point device may send the twentieth message to the access control device by using a WTP Event Response (V[Target WBAP ID, Relocation Complete ACK).

When the source access point device determines the tunnel endpoint identifier of the target access point device according to the preset rule, S315 and S316 may not be performed.

The thirteenth message sent by the target access point device in step S309 and the seventeenth message sent by the target access point device in step S313 may be combined into one message for sending; to be specific, the Modify Tunnel Request and the Relocation Complete Notification may be carried in a same WTP Event Request message and sent to the access control device. The fourteenth message sent by the access control device in step S310 and the eighteenth message sent by the access control device in step S314 may also be combined into one message for sending. After receiving the fifteenth message sent by the anchor device in step S311 and the nineteenth message sent by the source access point device in step S315, the access control device may combine the fifteenth message and the nineteenth message into one message and send the combined message to the target access point device, that is, the Modify Tunnel Response and the Relocation Complete ACK may be carried in the WTP Event Response message and sent to the target access point device.

In this embodiment of this application, the source access point device notifies, through the access control device, the target access point device that the terminal device is prepared to be handed over to the target access point device, so that the target access point device prepares the air interface resource for the terminal device, and the terminal device can be handed over to the target access point device. In the prior art, a source eNodeB first notifies, through a source MME, a target MME that the terminal device is prepared to be handed over to the target access point device, and then the target MME notifies a target service GW and a target eNodeB that the terminal device is prepared to be handed over to the target access point device, so that the target MME, the target service GW, and the target eNodeB prepare access resources for the target eNodeB respectively, and the terminal device can be handed over to the target access point device. Compared with the prior art, this embodiment of this application can simplify a network procedure and further improve a handover speed.

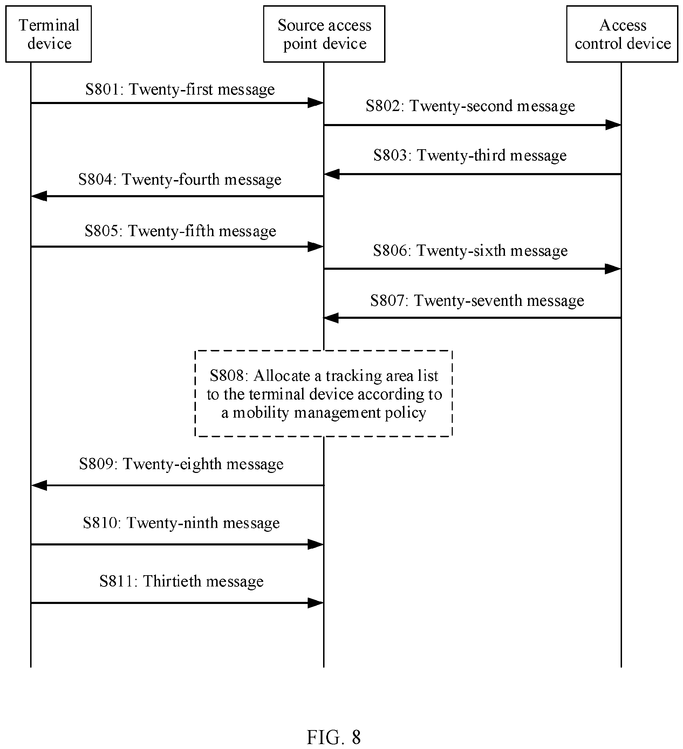

Based on the communications system shown in FIG. 2, an embodiment of this application further provides an attach method of a terminal device, as shown in FIG. 8. The handover method shown in FIG. 3 and the attach method of the terminal device shown in FIG. 8 may be combined as one solution for use, or may be separately used as two independent solutions. This is not specifically limited in this embodiment of this application. The attach method of the terminal device includes the following steps.

S801: The terminal device sends a twenty-first message to a source access point device, where the twenty-first message is used by the terminal device to request to be attached to a data network. The twenty-first message may be an attach request (Attach Request) message or a registration request (Registration Request) message.

S802: The source access point device sends a twenty-second message to an access control device, where the twenty-second message is used to request an authentication vector of the terminal device from the access control device. The authentication vector is data for determining whether the terminal device is a valid subscriber.

In an implementation, the twenty-second message may be a WTP Event Request message. A format of the twenty-second message may be a WTP Event Request (V[Target WBAP ID, authentication data request (Authentication data request)]), the Target WBAP ID may be an identifier of the access control device, and the Authentication data request is used to request the authentication vector of the terminal device from the access control device.

In another implementation, the twenty-second message may be an Authentication data request. Therefore, the source access point device may send the twenty-second message to the access control device by using a WTP Event Request (V[Target WBAP ID, Authentication data request).

S803: The access control device sends the authentication vector of the terminal device to the source access point device. The access control device may send the authentication vector of the terminal device to the source access point device by using a twenty-third message.

In an implementation, the twenty-third message may be a WTP Event Response message. A format of the twenty-third message may be a WTP Event Response (V[Target WBAP ID, authentication data response (Authentication Data Response)]), the Target WBAP ID may be an identifier of the source access point device, and the Authentication Data Response carries the authentication vector of the terminal device.

In another implementation, the twenty-third message may be an Authentication Data Response. Therefore, the access control device may send the twenty-third message to the source access point device by using a WTP Event Response (V[Target WBAP ID, Authentication Data Response).

S804: The source access point device sends a twenty-fourth message to the terminal device, where the twenty-fourth message is used to request the terminal device to perform NAS authentication. The twenty-fourth message may be an Authentication Request message.

S805: After completing the NAS authentication, the terminal device sends a twenty-fifth message to the source access point device, where the twenty-fifth message is used to notify the source access point device of a NAS authentication result of the terminal device. The twenty-fourth message may be an Authentication Response message.

S806: The source access point device sends a twenty-sixth message to the access control device, where the twenty-sixth message is used to: notify the access control device that the terminal device is successfully attached, and register the source access point device with the access control device.

In an implementation, the twenty-sixth message may be a WTP Event Request message. A format of the twenty-sixth message may be a WTP Event Request (V[Target WBAP ID, update location request (Update location request)]), the Target WBAP ID may be an identifier of the access control device, and the Update location request is used to: notify the access control device that the terminal device is successfully attached, and register the source access point device with the access control device.

In another implementation, the twenty-sixth message may be an Update location request. Therefore, the source access point device may send the twenty-sixth message to the access control device by using a WTP Event Request (V[Target WBAP ID, Update location request).

The WTP Event Request message corresponding to the twenty-sixth message may further include a create tunnel request (Create Tunnel request) message, and the Create Tunnel Request message may carry one or more of the following parameters: an identifier of the terminal device, an identifier of a bearer allocated by the source access point device to the terminal device, a PDN connection identifier, a PDU session identifier, an access point identifier (Access Point Name, APN), a data network name (data network name, DNN), and the like. The Create Tunnel request message may further carry information about a tunnel endpoint identifier pre-allocation capability of the source access point device. For details of the information about the tunnel endpoint identifier pre-allocation capability, refer to step S307 in FIG. 3. Details are not described again in this embodiment of this application.

S807: The access control device sends a twenty-seventh message to the source access point device.

In an implementation, the twenty-seventh message may be a WTP Event Response message. A format of the twenty-seventh message may be a WTP Event Response (V[Target WBAP ID, update location response (Update location Response)]), and the Target WBAP ID may be an identifier of the source access point device.

In another implementation, the twenty-seventh message may be an Update location Response. Therefore, the access control device may send the twenty-seventh message to the source access point device by using a WTP Event Response (V[Target WBAP ID, Update location Response).

The WTP Event Response message corresponding to the twenty-seventh message may further include a mobility management policy (Mobility Management Policy), and may further include a create tunnel response (Create Tunnel Response) message. The Mobility Management Policy may include a globally unique temporary UE identity (globally unique temporary UE identity, GUTI) allocated by the access control device to the terminal device, and may further include an S-temporary mobile subscriber identity (S-temporary mobile subscriber identity, S-TMSI), a moving track of the terminal device, and a moving range of the terminal device. The Create Tunnel Response message may carry a list of APNs or DNNs that are allowed to perform access, or may further carry a traffic distribution indication; to be specific, to indicate local forwarding or centralized forwarding, or may further carry a UE-aggregate maximum bit rate (UE-aggregate maximum bit rate, UE-AMBR), or a QoS rule (rule). If the centralized forwarding is performed and the access control device supports a tunnel endpoint identifier pre-allocation capability, the Create Tunnel Response message may further carry information about the tunnel endpoint identifier pre-allocation capability of the access control device, or may further carry a bearer identifier of the terminal device. After receiving the information about the tunnel endpoint identifier pre-allocation capability of the access control device and the bearer identifier of the terminal device, the source access point device may activate a bearer of the terminal device.

After step S807 is performed, step S808 may be performed.

S808: The source access point device allocates a tracking area (tracking area, TA) list (list) to the terminal device according to the Mobility Management Policy, where the TA list may include one or more TAs. In a range of the TA list allocated by the source access point device according to the Mobility Management Policy, a temporary identifier of the terminal device does not change. If the source access point device determines, according to the Mobility Management Policy, that a moving range of a terminal device is relatively small, the source access point device may allocate a TA list with a relatively small range to the terminal device. In this way, during paging, the source access point device only needs to page the terminal device in the TA list with the relatively small range. If the source access point device determines, according to the Mobility Management Policy, that a moving range of a terminal device is relatively large, the source access point device may allocate a TA list with a relatively large range or even a TA list of an entire network to the terminal device. In this way, during paging, the source access point device only needs to page the terminal device in the TA list with the relatively large range.

The Mobility Management Policy may be included in a mobility management context, and may be synchronized to another access point device with first information of the terminal device. For the first information, refer to step S301 in FIG. 3. Details are not described again in this embodiment of this application.

S809: The source access point device sends a twenty-eighth message to the terminal device, where the twenty-eighth message is used to notify that the terminal device is successfully attached. The twenty-eighth message may further carry a TA list sent by the source access point device to the terminal device.

In an implementation, the twenty-eighth message may be an RRC connection reconfiguration (RRC connection reconfiguration) message in the CAPWAP protocol. A format of the twenty-eighth message may be an RRC connection reconfiguration (V[Target WBAP ID, NAS attach accept (NAS Attach Accept)]), the Target WBAP ID may be an identifier of the terminal device, and the NAS Attach Accept is used to notify that the terminal device is successfully attached.

In another implementation, the twenty-eighth message may be a NAS Attach Accept. Therefore, the source access point device may send the twenty-eighth message to the terminal device by using an RRC connection reconfiguration (V[Target WBAP ID, NAS Attach Accept).

S810: The terminal device sends a twenty-ninth message to the source access point device, where the twenty-ninth message is used to notify the source access point device that an RRC connection is re-completed. The twenty-ninth message may be an RRC connection reconfiguration complete message in the CAPWAP protocol.

S811: The terminal device sends a thirtieth message to the source access point device, where the thirtieth message is used to notify the source access point device that the terminal device is successfully attached. The thirtieth message may be an attach complete (Attach complete) message in the CAPWAP protocol.

For step S810 and step S811, refer to a process in which the terminal device is successfully attached in the 3GPP protocol.

The foregoing mainly describes the solutions provided in this application from a perspective of interaction between network elements. It may be understood that to implement the foregoing functions, each network element includes a corresponding hardware structure and/or software module for implementing each function. A person of ordinary skill in the art should easily be aware that, in combination with the examples described in the embodiments disclosed in this specification, units and algorithms steps may be implemented by hardware or a combination of hardware and computer software in the present invention. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

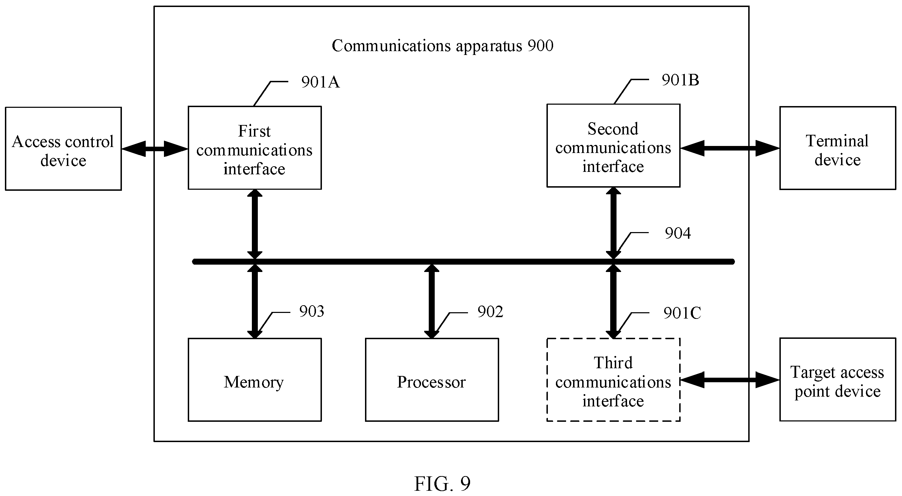

Based on a same inventive concept, as shown in FIG. 9, an embodiment of this application provides a communications apparatus 900. The communications apparatus 900 may be a source access point device or a chip in a source access point device, and may perform the method performed by the source access point device in any one of the foregoing embodiments. The communications apparatus 900 includes a first communications interface 901A, a second communications interface 901B, a processor 902, and a memory 903, and the communications apparatus 900 may further include a third communications interface 901C. The first communications interface 901A is configured to receive and send a message between the communications apparatus and an access control device, the second communications interface 901B is configured to receive and send a message between the communications apparatus and a target access point device, and the third communications interface 901C is configured to receive and send data between the communications apparatus and the target access point device. The memory 903 is configured to store a program executed by the processor 902, and the processor 902 controls execution. The processor 902 is configured to execute program code stored in the memory 903, to implement the handover method and the attachment method of the terminal device provided in the foregoing embodiments of this application. The processor 902 is specifically configured to perform operations of the source access point device in the methods in the embodiments shown in FIG. 3 to FIG. 8, for example, perform step 301 in FIG. 3 through the first communications interface 901A, step S306 in FIG. 3 through the second communications interface 901B, step S307 through the third communications interface 901C, and step S802 in FIG. 8 and step S808 in FIG. 8 through the first communications interface 901A. For details, refer to the methods in the embodiments shown in FIG. 3 to FIG. 8. Details are not described again in this application. For example, the first communications interface 901A, the second communications interface 901B, and the third communications interface 901C may be transceivers, or may be interface circuits such as transceiver circuits, or may be transceiver chips, or the like. The first communications interface 901A may transmit data to the access control device through a control plane WB-1 interface. The second communications interface 901B may transmit data to the terminal device through a control plane WB-Uu interface. The third communications interface 901C may transmit data to the target access point device in an IP routing and forwarding manner.

The memory 903 may be a read-only memory (read-only memory, ROM) or another type of static storage device that can store static information and an instruction, or a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer, but is not limited thereto. The memory may exist independently, and is connected to the processor through a communication line. The memory may alternatively be integrated with the processor.

The processor 802 may be a central processing unit (English: central processing unit, CPU for short), a microprocessor, an application-specific integrated circuit, a programmable logic circuit, a large-scale integrated circuit, a digital processing unit, or the like.

Optionally, the computer executable instruction in this embodiment of this application may also be referred to as application program code. This is not specifically limited in this embodiment of this application.

A specific connection medium between the first communications interface 901A, the second communications interface 901B, the processor 902, the memory 903, and the third communications interface 901C is not limited in this embodiment of this application. In this embodiment of this application, in FIG. 9, the first communications interface 901A, the second communications interface 901B, the processor 902, the memory 903, and the third communications interface 901C are connected by using a bus 904. The bus is represented by using a bold line in FIG. 9. A connection manner between other components is merely an example for description, but is not limited thereto. The bus may be classified into an address bus, a data bus, a control bus, and the like. For ease of representation, only one thick line is used to represent the bus in FIG. 9, but this does not mean that there is only one bus or only one type of bus.

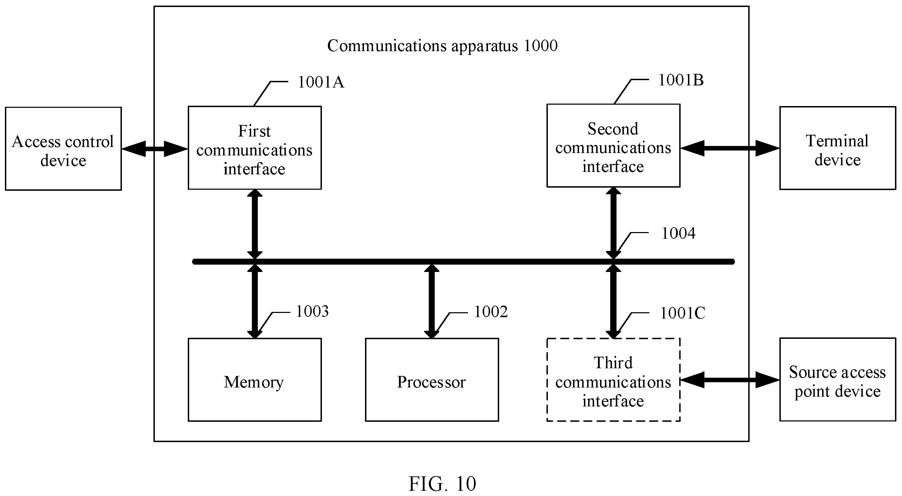

Based on a same inventive concept, as shown in FIG. 10, an embodiment of this application provides a communications apparatus 1000. The communications apparatus 1000 may be a target access point device or a chip in a target access point device, and may perform the method performed by the target access point device in any one of the foregoing embodiments. The communications apparatus 1000 includes a first communications interface 1001A, a second communications interface 1001B, a processor 1002, and a memory 1003, and the communications apparatus 1000 may further include a third communications interface 1001C. The first communications interface 1001A is configured to receive and send a message between the communications apparatus and an access control device, the second communications interface 1001B is configured to receive and send a message between the communications apparatus and a terminal device, and the third communications interface 1001C is configured to receive and send data between the communications apparatus and a source access point device. The memory 1003 is configured to store a program executed by the processor 1002, and the processor 1002 controls execution. The processor 1002 is configured to execute program code stored in the memory 1003, to implement the handover method and the attachment method of the terminal device provided in the foregoing embodiments of this application. The processor 1002 is specifically configured to perform operations of the target access point device in the methods in the embodiments shown in FIG. 3 to FIG. 8, for example, perform step 304 in FIG. 3 through the first communications interface 1001A, step S308 in FIG. 3 through the second communications interface 1001B, and step S307 through the third communications interface 1001C. For details, refer to the methods in the embodiments shown in FIG. 3 to FIG. 8. Details are not described again in this application.

For example, the first communications interface 1001A, the second communications interface 1001B, and the third communications interface 1001C may be transceivers, or may be interface circuits such as transceiver circuits, or may be transceiver chips, or the like. The first communications interface 1001A may transmit data to the access control device through a control plane WB-1 interface. The second communications interface 1001B may transmit data to the terminal device through a control plane WB-Uu interface. The third communications interface 1001C may transmit data to the target access point device in an IP routing and forwarding manner.

The memory 1003 may be a read-only ROM or another type of static storage device that can store static information and an instruction, or a RAM or another type of dynamic storage device that can store information and an instruction, or may be an EEPROM, a CD-ROM or other compact disc storage, optical disc storage (including a compact disc, a laser disc, an optical disc, a digital versatile disc, a blue-ray disc, or the like), and a disk storage medium or another disk storage device, or any other medium that can be used to carry or store expected program code in an instruction or data structure form and can be accessed by a computer. However, this is not limited herein. The memory may exist independently, and is connected to the processor through a communication line. The memory may alternatively be integrated with the processor.

The processor 802 may be a CPU, a microprocessor, an application-specific integrated circuit, a programmable logic circuit, a large-scale integrated circuit, a digital processing unit, or the like.

Optionally, the computer executable instruction in this embodiment of this application may also be referred to as application program code. This is not specifically limited in this embodiment of this application.

A specific connection medium between the first communications interface 1001A, the second communications interface 1001B, the processor 1002, the memory 1003, and the third communications interface 1001C is not limited in this embodiment of this application. In this embodiment of this application, in FIG. 10, the first communications interface 1001A, the second communications interface 1001B, the processor 1002, the memory 1003, and the third communications interface 1001C are connected by using a bus 1004. The bus is represented by using a bold line in FIG. 10. A connection manner between other components is merely an example for description, but is not limited thereto. The bus may be classified into an address bus, a data bus, a control bus, and the like. For ease of representation, only one thick line is used to represent the bus in FIG. 10, but this does not mean that there is only one bus or only one type of bus.

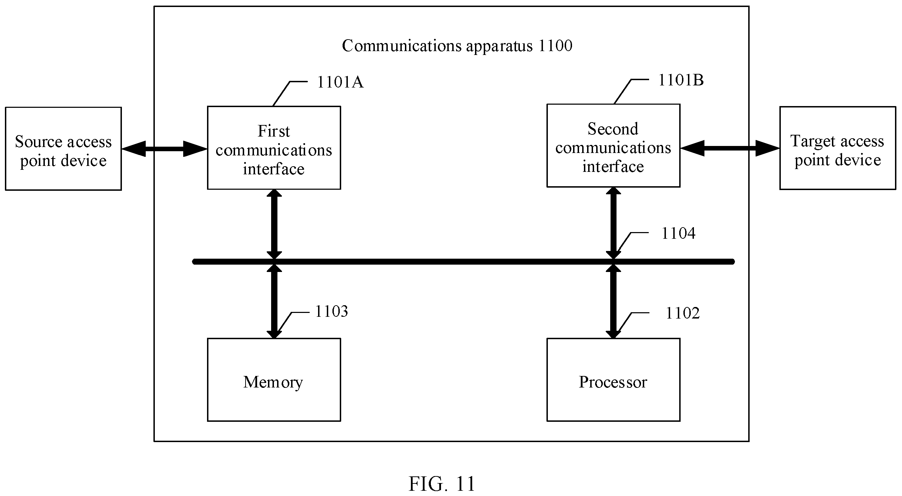

Based on a same inventive concept, as shown in FIG. 11, an embodiment of this application provides a communications apparatus 1100. The communications apparatus 1100 may be an access control device or a chip in an access control device, and may perform the method performed by the access control device in any one of the foregoing embodiments. The communications apparatus 1100 includes a first communications interface 1101A, a second communications interface 1101B, a processor 1102, and a memory 1103. The first communications interface 1101A is configured to receive and send a message between the communications apparatus and a source access point device, and the second communications interface 1101B is configured to receive and send a message between the communications apparatus and a target access point device. The memory 1103 is configured to store a program executed by the processor 1102, and the processor 1102 controls execution. The processor 1102 is configured to execute program code stored in the memory 1103, to implement the handover method and the attachment method of the terminal device provided in the foregoing embodiments of this application. The processor 1102 is specifically configured to perform operations of the access control device in the methods in the embodiments shown in FIG. 3 to FIG. 8, for example, perform step 301 in FIG. 3 through the first communications interface 1101A, step S302 in FIG. 3 through the second communications interface 1101B, and step S803 in FIG. 3 through the first communications interface 1101A. For details, refer to the methods in the embodiments shown in FIG. 3 to FIG. 8. Details are not described again in this application.

For example, the first communications interface 1101A and the second communications interface 1101B may be transceivers, or may be interface circuits such as transceiver circuits, or may be transceiver chips, or the like. The first communications interface 1101A may transmit data to the source access point device through a control plane WB-1 interface. The second communications interface 1101B may transmit data to the terminal device through a control plane WB-1 interface.

The memory 1103 may be a ROM or another type of static storage device that can store static information and an instruction, or a RAM or another type of dynamic storage device that can store information and an instruction, or may be an EEPROM, a CD-ROM or other compact disc storage, optical disc storage (including a compact disc, a laser disc, an optical disc, a digital versatile disc, a blue-ray disc, or the like), and a disk storage medium or another disk storage device, or any other medium that can be used to carry or store expected program code in an instruction or data structure form and can be accessed by a computer. However, this is not limited herein. The memory may exist independently, and is connected to the processor through a communication line. The memory may alternatively be integrated with the processor.

The processor 802 may be a CPU, a microprocessor, an application-specific integrated circuit, a programmable logic circuit, a large-scale integrated circuit, a digital processing unit, or the like.

Optionally, the computer executable instruction in this embodiment of this application may also be referred to as application program code. This is not specifically limited in this embodiment of this application.

A specific connection medium between the first communications interface 1101A, the second communications interface 1101B, the processor 1102, the memory 1103, and the third communications interface 1101C is not limited in this embodiment of this application. In this embodiment of this application, in FIG. 11, the first communications interface 1101A, the second communications interface 1101B, the processor 1102, the memory 1103, and the third communications interface 1101C are connected by using a bus 1104. The bus is represented by using a bold line in FIG. 11. A connection manner between other components is merely an example for description, but is not limited thereto. The bus may be classified into an address bus, a data bus, a control bus, and the like. For ease of representation, only one thick line is used to represent the bus in FIG. 11, but this does not mean that there is only one bus or only one type of bus.

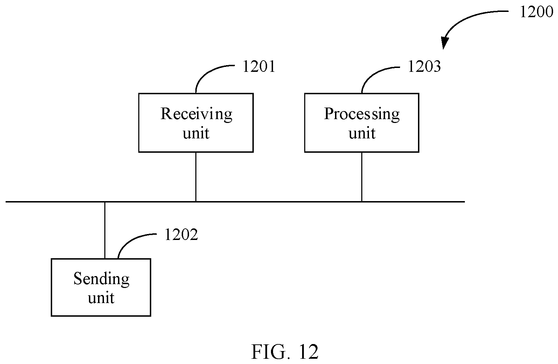

In this application, function modules in the apparatus may be obtained through division based on the foregoing method examples. For example, the function modules may be obtained through division based on corresponding functions, or two or more functions may be integrated into one processing module. The foregoing integrated module may be implemented in a form of hardware, or may be implemented in a form of a software function module. It should be noted that, in this application, module division is an example, and is merely logical function division. In actual implementation, another division manner may be used. For example, when the function modules are obtained through division based on corresponding functions, FIG. 12 is a schematic diagram of an apparatus. The apparatus 1200 may be the source access point device, the target access point device, the access control device, a chip in the source access point device, a chip in the target access point device, or a chip in the access control device in the foregoing embodiments. The apparatus 1200 includes a receiving unit 1201, a sending unit 1202, and a processing unit 1203. In an implementation, if the apparatus is a source access point device or a chip in a source access point device, the apparatus 1200 may implement the following operations: the sending unit 1202 is configured to: send a first message to the target access point device through the access control device, where the first message is used to notify the target access point device that a terminal device is prepared to be handed over to the target access point device, and send a second message to the terminal device, where the second message is used to indicate the terminal device to be handed over to the target access point device.

In an implementation, the first message carries first information, and the first information includes at least one of the following information: connection context information of a connection established by the terminal device on the source access point device, a mobility management context of the terminal device, and a Source access point device to Target access point device container.

In an implementation, the receiving unit 1201 is configured to receive second information that is sent by the target access point device through the access control device, where the second information includes at least one of the following information: connection context information of a connection established by the target access point device based on the first information, and a Target access point device to Source access point device container.

In an implementation, the processing unit 1203 is configured to determine the target access point device based on third information. The third information includes at least one of the following information: a measurement report sent by the terminal device to the source access point device, load information of a plurality of access point devices, and a mobility management context of the terminal device.

In an implementation, the mobility management context includes at least one of the following information: a temporary identifier of the terminal device, a moving track of the terminal device, a moving range of the terminal device, and a tracking area list of the terminal device; and the tracking area list includes at least one tracking area. In an implementation, the receiving unit 1201 is further configured to receive a mobility management policy that is of the terminal device and that is sent by the access control device, where the mobility management policy includes at least one of the following information: a temporary identifier of the terminal device, a moving track of the terminal device, a moving range of the terminal device, and the like. The processing unit 1203 is further configured to allocate a tracking area list to the terminal device according to the mobility management policy, where the tracking area list includes at least one tracking area.

In an implementation, the processing unit 1203 is further configured to obtain the load information of the plurality of access point devices from the access control device.

In an implementation, the processing unit 1203 is further configured to: before the sending unit 1202 sends the second message to the terminal device, determine a tunnel endpoint identifier of the target access point device. The sending unit 1202 is further configured to send data to a tunnel corresponding to the tunnel endpoint identifier of the target access point device, where the data is of the terminal device and is received by the source access point device from an anchor device.

In an implementation, when determining the tunnel endpoint identifier of the target access point device, the processing unit 1203 is specifically configured to: if determining that the target access point device can allocate the tunnel endpoint identifier according to a preset rule, determine the tunnel endpoint identifier according to the preset rule. Alternatively, the processing unit 1203 is specifically configured to control the receiving unit 1201 to receive the tunnel endpoint identifier that is sent by the target access point device through the access control device.

In an implementation, when determining the tunnel endpoint identifier according to the preset rule, the processing unit 1203 is specifically configured to control the sending unit 1202 to send a data packet to the target access point device, where a preset field in an encapsulation header of the data packet is the tunnel endpoint identifier, and the tunnel endpoint identifier includes at least one of the following information: an identifier of the terminal device and a connection identifier of the terminal device.

Specifically, functions/implementation processes of the receiving unit 1201, the processing unit 1203, and the sending unit 1202 in FIG. 12 may be implemented by the processor 902 in FIG. 9 by invoking the computer executable instruction stored in the memory 903. Alternatively, a function/implementation process of the processing unit 1203 in FIG. 12 may be implemented by the processor 902 in FIG. 9 by invoking the computer executable instruction stored in the memory 903, and functions/implementation processes of the receiving unit 1201 and the sending unit 1202 in FIG. 12 maybe implemented through the communications interfaces 901Ato 901C in FIG. 9.

In another implementation, if the apparatus is a target access point device or a chip in a target access point device, the apparatus 1200 may implement the following operations: the receiving unit 1201 is configured to receive a first message that is sent by a source access point device through the access control device, where the first message is used to notify the target access point device that a terminal device is prepared to be handed over to the target access point device. The processing unit 1203 is configured to prepare an air interface resource for the terminal device based on first information, where the first information includes at least one of the following information: connection context information of a connection established by the terminal device on the source access point device, a mobility management context of the terminal device, and a Source access point device to Target access point device container. The receiving unit 1201 is further configured to receive a second message sent by the terminal device, where the second message is used to notify the target access point device that the terminal device is already handed over to the target access point device.

In an implementation, the first information is sent by the source access point device to the target access point device by using the first message, or the first information is obtained by the target access point device in advance.

In an implementation, if the first information is obtained by the target access point device in advance, the receiving unit 1201 is further configured to receive the first information that is sent by the access control device in an attach process of the terminal device or after the terminal device establishes the connection.

In an implementation, the sending unit 1202 is configured to send second information to the source access point device through the access control device, where the second information includes at least one of the following information: connection context information of a connection established by the target access point device based on the first information, and a Target access point device to Source access point device container.

In an implementation, the sending unit 1202 is further configured to send a first tunnel endpoint identifier to the source access point device through the access control device. The receiving unit 1201 is further configured to receive, through a first tunnel corresponding to the first tunnel endpoint identifier, a data packet sent by the source access point device, where the data packet is data that is of the terminal device and that is received by the source access point device from an anchor device.

In an implementation, the processing unit 1203 is further configured to allocate a second tunnel endpoint identifier according to a preset rule. The receiving unit 1201 is further configured to receive, through a second tunnel corresponding to the second tunnel endpoint identifier, the data packet sent by the source access point device.

In an implementation, when allocating the second tunnel endpoint identifier according to the preset rule, the processing unit 1203 is specifically configured to control the receiving unit 1201 to receive the data packet sent by the source access point device, where a preset field in an encapsulation header of the data packet is the tunnel endpoint identifier, and the tunnel endpoint identifier includes at least one of the following information: an identifier of the terminal device and a connection identifier of the terminal device.

In an implementation, the sending unit 1202 is further configured to send a third message to the access control device, where the third message is used to request the access control device to establish a third tunnel between the target access point device and the anchor device, and the third tunnel is used to: after the terminal device is handed over to the target access point device, transmit the data of the terminal device between the target access point device and the anchor device.

In an implementation, the mobility management context includes at least one of the following information: a temporary identifier of the terminal device, a moving track of the terminal device, a moving range of the terminal device, and a tracking area list of the terminal device; and the tracking area list includes at least one tracking area.

Specifically, functions/implementation processes of the receiving unit 1201, the processing unit 1203, and the sending unit 1202 in FIG. 12 may be implemented by the processor 901 in FIG. 9 by invoking the computer executable instruction stored in the memory 903. Alternatively, a function/implementation process of the processing unit 1203 in FIG. 12 may be implemented by the processor 901 in FIG. 9 by invoking the computer executable instruction stored in the memory 903, and functions/implementation processes of the receiving unit 1201 and the sending unit 1202 in FIG. 12 may be implemented through the communications interface 904 in FIG. 9.

In another implementation, if the apparatus is an access control device or a chip in an access control device, the apparatus 1200 may implement the following operations: the receiving unit 1201 is configured to receive a first message sent by a source access point device, where the first message is used to notify the access control device that a terminal device is prepared to be handed over to a target access point device. The sending unit 1202 is configured to send a second message to the target access point device, where the second message is used to notify the target access point device that the terminal device is prepared to be handed over to the target access point device.

In an implementation, the first message carries first information, and the first information includes at least one of the following information: connection context information of a connection established by the terminal device on the source access point device, a mobility management context of the terminal device, and a Source access point device to Target access point device container.

In an implementation, the mobility management context includes at least one of the following information: a temporary identifier of the terminal device, a moving track of the terminal device, a moving range of the terminal device, and a tracking area list of the terminal device; and the tracking area list includes at least one tracking area.

In an implementation, the receiving unit 1201 is further configured to receive second information sent by the target access point device, where the second information includes at least one of the following information: connection context information of a connection established by the target access point device based on the first information, and a Target access point device to Source access point device container. The sending unit 1202 is further configured to send the second information to the source access point device.

In an implementation, the receiving unit 1201 is further configured to receive a third message sent by the target access point device, where the third message is used to request the access control device to establish a tunnel between the target access point device and an anchor device, and the tunnel is used to: after the terminal device is handed over to the target access point device, transmit data of the terminal device between the target access point device and the anchor device. The processing unit 1203 is further configured to establish the tunnel between the target access point device and the anchor device.

In an implementation, the sending unit 1202 is further configured to send a mobility management policy of the terminal device to the source access point device, where the mobility management policy includes at least one of the following information: a temporary identifier of the terminal device, a moving track of the terminal device, a moving range of the terminal device, and the like.

Specifically, functions/implementation processes of the receiving unit 1201, the processing unit 1203, and the sending unit 1202 in FIG. 12 may be implemented by the processor 901 in FIG. 9 by invoking the computer executable instruction stored in the memory 903. Alternatively, a function/implementation process of the processing unit 1203 in FIG. 12 may be implemented by the processor 901 in FIG. 9 by invoking the computer executable instruction stored in the memory 903, and functions/implementation processes of the receiving unit 1201 and the sending unit 1202 in FIG. 12 may be implemented through the communications interface 904 in FIG. 9.

An embodiment of this application further provides a computer-readable storage medium, configured to store a computer software instruction used to execute operations that the processor needs to execute. The computer software instruction includes a program used to execute the operations that the processor needs to execute.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more processes in the flowcharts and/or in one or more blocks in the block diagrams.

The computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may be loaded onto the computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover the modifications and variations of this application provided that they fall within the scope of the following claims and equivalent technologies of this application.

## Claims

1. A handover method, comprising:
sending, by a source access point device, a first message to a target access point device through an access control device, wherein the first message is used to notify the target access point device that a terminal device is prepared to be handed over to the target access point device; and
sending, by the source access point device, a second message to the terminal device, wherein the second message is used to indicate the terminal device to be handed over to the target access point device.

2. The method according to claim 1, wherein the first message carries first information, and the first information comprises at least one of the following information: connection context information of a connection established by the terminal device on the source access point device, a mobility management context of the terminal device, and a Source access point device to Target access point device container.

3. The method according to claim 1, wherein the method further comprises:
receiving, by the source access point device, second information that is sent by the target access point device through the access control device, wherein the second information comprises at least one of the following information: connection context information of a connection established by the target access point device based on first information, and a Target access point device to Source access point device container; and the first information comprises at least one of the following information: connection context information of a connection established by the terminal device on the source access point device, a mobility management context of the terminal device, and a Source access point device to Target access point device container.

4. The method according to any one of claims 1 to 3, wherein the method further comprises:
determining, by the source access point device, the target access point device based on third information, wherein
the third information comprises at least one of the following information: a measurement report sent by the terminal device to the source access point device, load information of a plurality of access point devices, and the mobility management context of the terminal device.

5. The method according to claim 2 or 4, wherein the mobility management context comprises at least one of the following information: a temporary identifier of the terminal device, a moving track of the terminal device, a moving range of the terminal device, and a tracking area list of the terminal device; and the tracking area list comprises at least one tracking area.

6. The method according to any one of claims 1 to 5, wherein the method further comprises:
receiving, by the source access point device, a mobility management policy that is of the terminal device and that is sent by the access control device, wherein the mobility management policy comprises at least one of the following information: the temporary identifier of the terminal device, the moving track of the terminal device, the moving range of the terminal device, and the like; and
allocating, by the source access point device, the tracking area list to the terminal device according to the mobility management policy, wherein the tracking area list comprises the at least one tracking area.

7. The method according to any one of claims 4 to 6, wherein the method further comprises:
obtaining, by the source access point device, the load information of the plurality of access point devices from the access control device.

8. The method according to any one of claims 1 to 7, wherein before the sending, by the source access point device, a second message to the terminal device, the method further comprises:
determining, by the source access point device, a tunnel endpoint identifier of the target access point device; and
sending, by the source access point device, data to a tunnel corresponding to the tunnel endpoint identifier of the target access point device, wherein the data is of the terminal device and is received by the source access point device from an anchor device.

9. The method according to claim 8, wherein the determining, by the source access point device, a tunnel endpoint identifier of the target access point device comprises:
if the source access point device determines that the target access point device can allocate the tunnel endpoint identifier according to a preset rule, determining, by the source access point device, the tunnel endpoint identifier according to the preset rule; or
receiving, by the source access point device, the tunnel endpoint identifier that is sent by the target access point device through the access control device.

10. The method according to claim 9, wherein the determining, by the source access point device, the tunnel endpoint identifier according to the preset rule comprises:
sending, by the source access point device, a data packet to the target access point device, wherein a preset field in an encapsulation header of the data packet is the tunnel endpoint identifier, and the tunnel endpoint identifier comprises at least one of the following information: an identifier of the terminal device and a connection identifier of the terminal device.

11. A handover method, comprising:
receiving, by a target access point device, a first message that is sent by a source access point device through the access control device, wherein the first message is used to notify the target access point device that a terminal device is prepared to be handed over to the target access point device;
preparing, by the target access point device, an air interface resource for the terminal device based on first information, wherein the first information comprises at least one of the following information: connection context information of a connection established by the terminal device on the source access point device, a mobility management context of the terminal device, and a Source access point device to Target access point device container; and
receiving, by the target access point device, a second message sent by the terminal device, wherein the second message is used to notify the target access point device that the terminal device is already handed over to the target access point device.

12. The method according to claim 11, wherein the first information is sent by the source access point device to the target access point device by using the first message, or the first information is obtained by the target access point device in advance.

13. The method according to claim 12, wherein if the first information is obtained by the target access point device in advance, the method further comprises:
receiving, by the target access point device, the first information that is sent by the access control device in an attach process of the terminal device or after the terminal device establishes the connection.

14. The method according to any one of claims 11 to 13, wherein the method further comprises:
sending, by the target access point device, second information to the source access point device through the access control device, wherein the second information comprises at least one of the following information: connection context information of a connection established by the target access point device based on the first information, and a Target access point device to Source access point device container.

15. The method according to any one of claims 11 to 14, wherein the method further comprises:
sending, by the target access point device, a first tunnel endpoint identifier to the source access point device through the access control device, and receiving, through a first tunnel corresponding to the first tunnel endpoint identifier, a data packet sent by the source access point device, wherein the data packet is data that is of the terminal device and that is received by the source access point device from an anchor device; or
allocating, by the target access point device, a second tunnel endpoint identifier according to a preset rule, and receiving, through a second tunnel corresponding to the second tunnel endpoint identifier, the data packet sent by the source access point device.

16. The method according to claim 15, wherein the allocating, by the target access point device, a second tunnel endpoint identifier according to a preset rule comprises:
receiving, by the target access point device, the data packet sent by the source access point device, wherein a preset field in an encapsulation header of the data packet is the tunnel endpoint identifier, and the tunnel endpoint identifier comprises at least one of the following information: an identifier of the terminal device and a connection identifier of the terminal device.

17. The method according to any one of claims 11 to 16, wherein the method further comprises:
sending, by the target access point device, a third message to the access control device, wherein the third message is used to request the access control device to establish a third tunnel between the target access point device and the anchor device, and the third tunnel is used to: after the terminal device is handed over to the target access point device, transmit the data of the terminal device between the target access point device and the anchor device.

18. The method according to any one of claims 11 to 17, wherein the mobility management context comprises at least one of the following information: a temporary identifier of the terminal device, a moving track of the terminal device, a moving range of the terminal device, and a tracking area list of the terminal device; and the tracking area list comprises at least one tracking area.

19. A communications apparatus, comprising:
a first communications interface, configured to receive and send a message between a source access point device and an access control device;
a second communications interface, configured to receive and send a message between the source access point device and a terminal device;
a memory, configured to store a computer program; and
a processor, configured to invoke the computer program stored in the memory, to perform the following operations:
sending a first message to a target access point device through the first communications interface and through the access control device, wherein the first message is used to notify the target access point device that the terminal device is prepared to be handed over to the target access point device; and
sending a second message to the terminal device through the second communications interface, wherein the second message is used to indicate the terminal device to be handed over to the target access point device.

20. The apparatus according to claim 19, wherein the first message carries first information, and the first information comprises at least one of the following information: connection context information of a connection established by the terminal device on the source access point device, a mobility management context of the terminal device, and a Source access point device to Target access point device container.

21. The apparatus according to claim 19, wherein the processor is further configured to receive, through the first communications interface, second information that is sent by the target access point device through the access control device, wherein the second information comprises at least one of the following information: connection context information of a connection established by the target access point device based on first information, and a Target access point device to Source access point device container; and the first information comprises at least one of the following information: connection context information of a connection established by the terminal device on the source access point device, a mobility management context of the terminal device, and a Source access point device to Target access point device container.

22. The apparatus according to any one of claims 19 to 21, wherein the processor is further configured to determine the target access point device based on third information, wherein
the third information comprises at least one of the following information: a measurement report sent by the terminal device to the source access point device, load information of a plurality of access point devices, and the mobility management context of the terminal device.

23. The apparatus according to claim 20 or 22, wherein the mobility management context comprises at least one of the following information: a temporary identifier of the terminal device, a moving track of the terminal device, a moving range of the terminal device, and a tracking area list of the terminal device; and the tracking area list comprises at least one tracking area.

24. The apparatus according to any one of claims 19 to 23, wherein the processor is further configured to: receive, through the first communications interface, a mobility management policy that is of the terminal device and that is sent by the access control device, and allocate the tracking area list to the terminal device according to the mobility management policy, wherein
the mobility management policy comprises at least one of the following information: the temporary identifier of the terminal device, the moving track of the terminal device, the moving range of the terminal device, and the like; and the tracking area list comprises the at least one tracking area.

25. The apparatus according to any one of claims 19 to 24, wherein the processor is further configured to obtain the load information of the plurality of access point devices from the access control device through the first communications interface.

26. The apparatus according to any one of claims 19 to 25, wherein the apparatus further comprises a third communications interface;
the third communications interface is configured to receive and send data between the source access point device and the target access point device; and
the processor is further configured to: before sending the second message to the terminal device through the second communications interface, determine a tunnel endpoint identifier of the target access point device; and
send, through the third communications interface, data to a tunnel corresponding to the tunnel endpoint identifier of the target access point device, wherein the data is of the terminal device and is received by the source access point device from an anchor device.

27. The apparatus according to claim 26, wherein when determining the tunnel endpoint identifier of the target access point device, the processor is specifically configured to:
if determining that the target access point device can allocate the tunnel endpoint identifier according to a preset rule, determine the tunnel endpoint identifier according to the preset rule; or
receive, through the second communications interface, the tunnel endpoint identifier that is sent by the target access point device through the access control device.

28. The apparatus according to claim 27, wherein when determining the tunnel endpoint identifier according to the preset rule, the processor is specifically configured to:
send a data packet to the target access point device through the third communications interface, wherein a preset field in an encapsulation header of the data packet is the tunnel endpoint identifier, and the tunnel endpoint identifier comprises at least one of the following information: an identifier of the terminal device and a connection identifier of the terminal device.

29. A communications apparatus, comprising:
a first communications interface, configured to receive and send a message between a target access point device and an access control device;
a second communications interface, configured to receive and send a message between the target access point device and a terminal device;
a memory, configured to store a computer program; and
a processor, configured to invoke the computer program stored in the memory, to perform the following operations:
receiving, through the first communications interface, a first message that is sent by a source access point device through the access control device, wherein the first message is used to notify the target access point device that the terminal device is prepared to be handed over to the target access point device;
preparing an air interface resource for the terminal device based on first information, wherein the first information comprises at least one of the following information: connection context information of a connection established by the terminal device on the source access point device, a mobility management context of the terminal device, and a Source access point device to Target access point device container; and
receiving, through the second communications interface, a second message sent by the terminal device, wherein the second message is used to notify the target access point device that the terminal device is already handed over to the target access point device.

30. The apparatus according to claim 29, wherein the first information is sent by the source access point device to the target access point device by using the first message, or the first information is obtained by the target access point device in advance.

31. The apparatus according to claim 30, wherein if the first information is obtained by the target access point device in advance, the processor is further configured to receive, through the first communications interface, the first information that is sent by the access control device in an attach process of the terminal device or after the terminal device establishes the connection.

32. The apparatus according to any one of claims 29 to 31, wherein the processor is further configured to send second information to the source access point device through the first communications interface and through the access control device, wherein the second information comprises at least one of the following information: connection context information of a connection established by the target access point device based on the first information, and a Target access point device to Source access point device container.

33. The apparatus according to any one of claims 29 to 32, wherein the apparatus further comprises a third communications interface;
the third communications interface is configured to receive and send data between the target access point device and the source access point device; and
the processor is further configured to: send a first tunnel endpoint identifier to the source access point device through the first communications interface and through the access control device, and receive, through the third communications interface and through a first tunnel corresponding to the first tunnel endpoint identifier, a data packet sent by the source access point device, wherein the data packet is data that is of the terminal device and that is received by the source access point device from an anchor device; or allocate a second tunnel endpoint identifier according to a preset rule, and receive, through the third communications interface and through a second tunnel corresponding to the second tunnel endpoint identifier, the data packet sent by the source access point device.

34. The apparatus according to claim 33, wherein when allocating the second tunnel endpoint identifier according to the preset rule, the processor is specifically configured to:
receive, through the third communications interface, the data packet sent by the source access point device, wherein a preset field in an encapsulation header of the data packet is the tunnel endpoint identifier, and the tunnel endpoint identifier comprises at least one of the following information: an identifier of the terminal device and a connection identifier of the terminal device.

35. The apparatus according to any one of claims 29 to 34, wherein the processor is further configured to send a third message to the access control device through the first communications interface, wherein the third message is used to request the access control device to establish a third tunnel between the target access point device and the anchor device, and the third tunnel is used to: after the terminal device is handed over to the target access point device, transmit the data of the terminal device between the target access point device and the anchor device.

36. The apparatus according to any one of claims 29 to 35, wherein the mobility management context comprises at least one of the following information: a temporary identifier of the terminal device, a moving track of the terminal device, a moving range of the terminal device, and a tracking area list of the terminal device; and the tracking area list comprises at least one tracking area.

37. A communications system, comprising the communications apparatus according to any one of claims 19 to 28 and the communications apparatus according to any one of claims 29 to 36.
